# EUROPEAN PATENT SPECIFICATION

(11) **EP 3 111 702 B1**
(45) Date of publication and mention of the grant of the patent: **23.06.2021**
(21) Application number: 14711977.0
(22) Date of filing: 21.03.2014
(51) Int. Cl.: H04W 52/02

(54) **METHODS AND NODES IN A WIRELESS COMMUNICATION NETWORK**
VERFAHREN UND KNOTEN IN EINEM FUNKKOMMUNIKATIONSNETZ
PROCÉDÉS ET N UDS DANS UN RÉSEAU DE COMMUNICATION SANS FIL

(43) Date of publication of application: 04.01.2017
(73) Proprietor: Huawei Technologies Co., Ltd., Longgang District Shenzhen, Guangdong 518129 (CN)
(72) Inventor: SOLDATI, Pablo, S-16440 Kista (SE)
(74) Representative: Gill Jennings & Every LLP
(86) International application number: PCT/EP2014/055763
(87) International publication number: WO 2015/139778

(56) References cited:
- EP-A1- 2 154 921
- EP-A1- 2 490 478
- EP-A1- 3 101 961
- US-A1- 2010 014 429

## Description

### TECHNICAL FIELD

Implementations described herein generally relate to a first network node, a method in a first network node, a mobile station and a method in a mobile station. In particular, a mechanism is herein described, for enabling the mobile station to periodically monitor at least one other network node, operating in discontinuous transmission mode.

### BACKGROUND

A mobile station, also known as a User Equipment (UE), wireless terminal and/ or mobile terminal is enabled to communicate wirelessly in a wireless communication network, sometimes also referred to as a cellular radio system. The communication may be made, e.g., between user equipment, between a user equipment and a wire connected telephone and/ or between a user equipment and a server via a Radio Access Network (RAN) and possibly one or more core networks. The wireless communication may comprise various communication services such as voice, messaging, packet data, video, broadcast, etc.

The mobile station may further be referred to as mobile telephone, cellular telephone, computer tablet or laptop with wireless capability, etc. The mobile station in the present context may be, for example, portable, pocket-storable, hand-held, computer-comprised, or vehicle-mounted mobile devices, enabled to communicate voice and/ or data, via the radio access network, with another entity, such as another mobile station, a stationary entity or a server.

The wireless communication network covers a geographical area which is divided into cell areas, with each cell area being served by a network node, radio network node or base station, e.g., a Radio Base Station (RBS) or Base Transceiver Station (BTS), which in some networks may be referred to as "eNB", "eNodeB", "NodeB" or "B node", depending on the technology and/ or terminology used.

Sometimes, the expression "cell" may be used for denoting the network node itself. However, the cell may also in normal terminology be used for the geographical area where radio coverage is provided by the network node at a base station site. One network node, situated on the base station site, may serve one or several cells. The network nodes may communicate over the air interface operating on radio frequencies with any mobile station within range of the respective network node.

In some radio access networks, several network nodes may be connected, e.g., by landlines or microwave, to a Radio Network Controller (RNC), e.g., in Universal Mobile Telecommunications System (UMTS). The RNC, also sometimes termed Base Station Controller (BSC), e.g., in GSM, may supervise and coordinate various activities of the plural radio network nodes connected thereto. GSM is an abbreviation for Global System for Mobile Communications (originally: Groupe Special Mobile).

In 3rd Generation Partnership Project (3GPP) Long Term Evolution (LTE), network nodes, which may be referred to as eNodeBs or eNBs, may be connected to a gateway, e.g., a radio access gateway, to one or more core networks. LTE is based on the GSM/ EDGE and UMTS/ HSPA network technologies, increasing the capacity and speed using a different radio interface together with core network improvements.

LTE-Advanced, i.e. LTE Release10 and later releases are set to provide higher bitrates in a cost efficient way and, at the same time, completely fulfil the requirements set by International Telecommunication Union (ITU) for the International Mobile Telecommunications (IMT)-Advanced, sometimes also referred to as 4G (abbreviation for "fourth generation").

In the present context, the expressions downlink, downstream link or forward link may be used for the transmission path from the network node to the mobile station. The expression uplink, upstream link or reverse link may be used for the transmission path in the opposite direction, i.e., from the mobile station to the network node.

Densification of radio network nodes is expected to lead to the spectral efficiency requirements envisioned for future radio access networks. However studies have showed that a plain network densification would significantly increase the overall energy costs. Therefore, future generations of dense radio access network may require to be co-designed to be both spectral- and energy-efficient.

To fulfil spectral- and energy-efficiency requirements, network nodes in dense networks can be dynamically switched on/ off in order to follow traffic variations or other relevant network statistics such as variations in activity within a cell at different hours, different days, different periods of the year etc. In other words, network nodes may operate in a discontinuous transmission (DTX) mode, where a network node is active when there is traffic to be served, and it transits into a dormant state (a.k.a. "off-state") with limited transmission and reception capabilities otherwise.

The feature of operating in DTX mode may with particular advantage be adopted for enhanced small cell operation, i.e., network nodes with a small coverage area. Typical scenarios may comprise two cases: (a) a macro-cell layer providing large coverage and clusters of small-cell nodes deployed in the same frequency band as the macro-cell layer (i.e., co-channel deployment) or in a disjoint frequency band (i.e. non-co-channel deployment); and: (b) isolated clusters of small-cells without macro-coverage.

Enabling network nodes to operate with long dormant cycles followed by very short active time has severe consequences on the efficiency of the cell discovery procedures and the relative energy consumption at the mobile station. The cell-search procedure of the related art 3GPP LTE system, for instance, is designed for a sparse deployment of macro base stations (i.e. eNodeBs) assumed constantly active. The procedure consists in a cell detection step, upon which a mobile station acquires time and frequency synchronization and performs initial signal strength measurements, followed by a phase in which the mobile station acquires other crucial system parameters that are necessary to demodulate other downlink signals.

By introducing a DTX mode for network nodes, some or all the signals typically transmitted by the network node in order to aid the mobile station to detect the network node, synchronize to the network, and/ or measure the received signal strength/ quality may either be absent or transmitted only sporadically. In general, the LTE cell-search procedure may not be sufficiently quick to enable the mobile station to detect the presence of a network node in DTX mode during the short period of time in which the network node is active. Therefore, new mechanisms and signals are needed in order for the mobile station to discover network nodes in dormant state.

To this end, in some 3GPP LTE-Advanced systems, downlink discovery signals may be transmitted by network nodes in the dormant state of a discontinuous transmission (DTX) mode to enable the mobile station to speed up the detection of dormant network nodes. Such discovery signals may comprise Discovery Reference Signals (DRS), transmitted in short periodic bursts of downlink signals, by network nodes in a dormant state while operating in DTX mode. Further, initial synchronization may be made by the mobile station, e.g., Radio Resource Management (RRM) and/ or Radio Link Management (RLM) measurements. Candidate signals include existing synchronization signals such as i.e., Primary and Secondary Synchronization Signals (PSS/ SSS) and/ or existing reference signals such as e.g., Channel State Information Reference Signals (CSI-RS), Positioning Reference Signals (PRS), modified version of the LTE synchronization signals and reference signals, or a combination thereof.

In particular, discovery signals in the 3GPP LTE-A have been studied in relation to two particular problems: 1) enhancing the detection performance of active cells in dense deployments; and 2) enabling the discovery of small cells in dormant state. The requirements and solutions for detecting a small cell in these two cases, however, may be rather different. In both cases, however, it is instrumental to assure energy-efficient discovery at the mobile station of the network nodes operating in DTX mode.

A drawback of the described prior art solution is that existing cell-search procedures are designed to detect network nodes that are always active and transmit downlink reference signals at known intervals and time-frequency resources. As discovery reference signals may flexibly change periodicity, time-frequency resources used, and type of signal, the existing cell-search procedures cannot assure sufficiently fast detection and signal strength measurements when a network node operating in DTX mode transits to active state. Detecting dormant network nodes with prior art cell-search procedures may require longer time, thereby affecting the energy consumption of the mobile station and may contribute to draining the battery, which typically has a limited capacity on a mobile station, as on any portable electronic equipment due to requirements of size and portability.

In some other previously known prior art, the detection probability of a large number of cells is maximized by either combining DRS with enhanced detection techniques at the mobile station based on interference cancellation or by synchronized transmission of discovery signals in clusters of cells, respectively. Candidate discovery reference signals for the third prior art are orthogonal CSI-RS signals or PRS signals with sub-carrier shifts.

A drawback with these prior art solutions is that maximizing the detection probability of network nodes operating in DTX mode requires the mobile station to prolong the detection and measurements, thereby not being energy-efficient and shorten battery re-charge time of the mobile station.

In yet a previously known prior art solution, network assistance associated to the DRS configuration is provided by the serving network node to the served mobile station to aid monitoring network nodes operating in DTX mode. Network assistance may include information associated to one or more in the group of: a rough synchronization timing of one or multiple network nodes operating in DTX mode, so as to reduce the mobile station effort for cell-detection by avoiding synchronizing to the cells cluster; Physical Cell-ID (PCI) information to identify the neighbouring network nodes in dormant state that the mobile station is required to monitor; type of DRS signal, e.g., time-frequency pattern, antenna port etc.

Similarly, drawbacks of network assistance based prior art is that the information provided by the network assistance aims at improving the detection probability of the other network nodes operating in DTX mode, but it is not energy efficient for the mobile station; actually it may be quite the opposite.

In a further known prior art solution, network assistance provides timing information associated to the reactivation time of other network nodes operating in DTX mode to be monitored, so as to enable the mobile station determine whether and when to monitor a dormant network node.

A drawback with such prior art solution is that the network is required to maintain a tight control over the mobile station with frequent information updates at the cost of large signalling overhead, which decreases the overall system capacity.

In yet a further prior art application, a network node in dormant state encodes timing information associated with its reactivation time within the DRS signal, thereby enabling the mobile station to determine whether to continue monitoring the dormant node and perform initial synchronization and measurements (e.g., if the reactivation time is imminent) or resume monitoring the network node at a later time, thus saving energy.

A drawback of such prior art method is that a potentially high detection complexity at the mobile station is required, due to the number of cases to be tested by, for instance, blind decoding, thereby again reducing the energy efficiency of the discovery of dormant network nodes, draining energy from the limited battery of the mobile station.

Therefore, energy-efficient solutions, not only on the network side but also on the mobile station side, for monitoring network nodes operating in DTX mode with reduced signalling overhead are desirable.

EP2154921A1 describes a Method for transferring a base station of a wireless communication network from a standby mode to a fully activated mode.

EP2490478A1 describes a method and an apparatus for obtaining information from a target base station.

US2010/014429A1 describes a method for reporting measurement information required for handover in active-state terminals executing a power-saving operation in a packet-based communication system.

EP3101961A1 having a priority date before the present application but being published after the priority date of the present application describes a method and system for determining delay difference between base stations and user equipment.

### SUMMARY

It is therefore an object to obviate at least some of the above mentioned disadvantages and enabling a mobile station to periodically monitoring a network node in dormant state, within a wireless communication network.

This and other objects are achieved by the features of the appended independent claims. Further implementation forms are apparent from the dependent claims, the description and the figures.

According to a first aspect, a first network node according to claim 1 is provided.

Thereby, timely and energy-efficient cell detection and periodic monitoring such as signal measurements at the mobile station are assured, when other network nodes in the wireless communication network may operate in a low-duty cycle discontinuous transmission mode. Further, by enabling a brief periodic monitoring time for the mobile station, distributed to the periodic occasions when the other network node transmits signals, energy is saved and the battery operative time of the mobile station is prolonged.

The first network node comprises a processor which is further configured for obtaining time-frequency charactristics of downlink signals transmitted by the at least one other network node to be monitored.

An advantage with obtaining the time-frequency characteristics of downlink signals transmitted by the at least one other network node is that it is possible for the first network node to provide precise information associated with the state switch between dormant state and active state of the at least one other network node, to the mobile station, independently of the relation between the first network node and the other network node, e.g. when both the first network node and the other network node are peers, or comprise small cell nodes in a cluster of small cell nodes.

The timing information comprises at least one of: a starting time, a monitoring periodicity, a monitoring window, and an ending time.

Thereby, it is possible for the mobile station to autonomously, based on the received timing information, decide when to periodically monitor the at least one other network node, without making unnecessary measurements, or requiring prolonged measurement time. Thereby, energy consumption of the mobile station is further reduced.

In a third possible implementation of the first network node according to the first aspect, or any of the previous implementations of the first aspect, the timing information may comprise a reference to a set of time-frequency resources, such as a bitmap indicating a set of subframes, and/ or set of a resource blocks, to monitor.

An advantage according to such implementation is that the mobile station is provided with accurate timing information associated with time-frequency resources to periodically monitor, thereby enabling the mobile station to operate timely and efficiently.

In a fourth possible implementation of the first network node according to the first aspect, or any of the previous implementations of the first aspect, the timing information for periodically monitoring the at least one other network node operating in discontinuous transmission mode is associated with an individual network node, or a group of network nodes.

An advantage according to such implementation is that the periodic monitoring operation of the mobile station is made more flexible while downlink signalling of timing information may be somewhat reduced, as some timing information may be common for a plurality of network nodes. Thereby processing efforts, signalling power and network signalling capacity in the downlink is reduced, due to less overhead signalling, which enhance system throughput and saves energy consumption at the mobile station side. Further, energy may be saved at the first network node. Also downlink signal interference is somewhat reduced due to the reduced downlink signalling.

In a fifth possible implementation of the first network node according to the first aspect, or any of the previous implementations, the timing information associated with periodic monitoring of the at least one other network node operating in discontinuous transmission mode may concern one or multiple component carriers.

Thereby precise timing and frequency information is provided to the mobile station, enabling the mobile station to increase the precision in the periodic monitoring of the other network node, rendering further decreased energy consumption. Thereby battery power is saved at the mobile station.

In a sixth possible implementation of the first network node according to the first aspect, or any of the previous implementations, the timing information for periodic monitoring of the at least one other network node operating in discontinuous transmission mode may be specific to one or more monitoring actions comprising: detecting downlink discovery signals; periodically measuring downlink discovery signals; and reporting measurements of downlink discovery signals from the mobile station to at least one network node.

Thereby, further flexibility is provided during the periodic monitoring operation of the mobile station, as different timing information such as different periodicity may be applied for different monitoring operations, leading to increased system efficiency.

In a seventh possible implementation of the first network node according to the first aspect, or any of the previous implementations, the timing information associated with periodic monitoring of the at least one other network node operating in discontinuous transmission mode, transmitted to the at least one mobile station, may be signalled via higher layer Radio Resource Control signalling and/ or via a physical layer downlink control channel.

An advantage of this implementation comprises increased flexibility in the signalling of timing information.

In a eighth possible implementation of the first network node according to the first aspect, or any of the previous implementations, the transmitted signal may be mobile station specific, or mobile stations group specific.

This flexibility enhancing feature has the further advantage of addressing e.g. all, or a subset of all mobile stations within a cell when transmitting the signal comprising timing information.

Thereby signalling overhead for controlling the periodic monitoring operation of the mobile stations in the cell is decreased. Thus processing efforts, signalling power and network signalling capacity in the downlink is reduced, due to less overhead signalling, leading to saved energy at the first network node. Also downlink signal interference is somewhat reduced due to the reduced downlink signalling.

In a ninth possible implementation of the first network node according to the first aspect, or any of the previous possible implementations, the first network node comprises a receiver, configured for receiving, from at least one mobile station, an indication of a set of timing information for periodically monitoring the at least one other network node operating in discontinuous transmission mode, which set has been selected by the mobile station; and wherein the processor is further configured for determining timing information for the periodic monitoring of the at least one other network node operating in discontinuous transmission mode, based on the received indication of the set of timing information.

An advantage by enabling the mobile station to determine timing information and provide an indication of such timing information to the first network node is that the monitoring operation of the individual mobile station may be adapted to individual constraints, requirements or performance of the mobile station. For example, monitoring action may be inhibited when the user of the mobile station is stationary at his/ her home at night time etc. Thus processing efforts and thereby time and battery power is saved in the mobile station, providing prolonged battery operative time of the mobile station without loss of user experienced performance.

In a tenth possible implementation of the first network node according to the first aspect, or any of the previous possible implementations, the timing information for periodic monitoring of the at least one other network node operating in discontinuous transmission mode may be determined based on time-frequency characteristics of at least one downlink signal transmitted by the at least one other network node to be monitored, during a dormant state of the at least one other network node operating in discontinuous transmission mode.

Thus brief but precise periodic monitoring time for the mobile station is provided, distributed to the periodic occasions when the other network node transmits signals, the battery operative time of the mobile station is prolonged.

According to a second aspect, a method according to claim 2 is provided.

Thereby, timely and energy-efficient cell detection and periodic monitoring such as signal measurements at the mobile station are assured, when other network nodes in the wireless communication network operates in a low-duty cycle discontinuous transmission mode. Further, by enabling a brief but precise periodic monitoring time for the mobile station, distributed to the periodic occasions when the other network node transmits signals, the battery operative time of the mobile station may be prolonged.

The method also comprises obtaining the time-frequency characteristics of downlink signals transmitted by the at least one other network node to be monitored.

An advantage with obtaining the time-frequency characteristics of downlink signals transmitted by the at least one other network node is that it is possible for the first network node to provide precise information associated with the state switch between dormant state and active state of the at least one other network node, to the mobile station, independently of the relation between the first network node and the other network node, e.g. when both the first network node and the other network node are peers, or comprise small cell nodes in a cluster of small cell nodes.

The timing information comprises at least one of: a starting time, a monitoring periodicity, a monitoring window and an ending time.

Thereby, it is possible for the mobile station to autonomously, based on the received timing information, decide when to periodically monitor the at least one other network node, without making unnecessary measurements, or requiring prolonged measurement time. Thereby, energy consumption of the mobile station is further reduced.

In a third possible implementation of the method according to the second aspect, or any previous implementation, the timing information may comprise a reference to a set of time-frequency resources, such as a bitmap indicating a set of subframes, and/ or a set of resource blocks, to monitor.

An advantage according to such implementation is that the mobile station is provided with accurate timing information associated with time-frequency resources to periodically monitor, thereby enabling the mobile station to operate timely and efficiently.

In a fourth possible implementation of the method according to the second aspect, or any previous implementation, one or more timing information for periodically monitoring the at least one other network node operating in discontinuous transmission mode may be associated with an individual network node or a group of network nodes.

An advantage according to such implementation is that the periodical monitoring operation of the mobile station is made more flexible while downlink signalling of timing information may be somewhat reduced, as some timing information may be common for a plurality of network nodes. Thereby processing efforts, signalling power and network signalling capacity in the downlink is reduced, due to less overhead signalling, which enhance system throughput and saves energy consumption at the mobile station side. Further, energy may be saved at the first network node. Also downlink signal interference is somewhat reduced due to the reduced downlink signalling.

In a fifth possible implementation of the method according to the second aspect, or any previous implementation, the timing information associated with periodic monitoring of the at least one other network node operating in discontinuous transmission mode, may concern one or multiple component carriers.

Thereby precise timing and frequency information is provided to the mobile station, enabling the mobile station to increase the precision in the periodic monitoring of the other network node, rendering further decreased energy consumption. Thereby battery power is saved at the mobile station.

In a sixth possible implementation of the method according to the second aspect, or any previous implementation, the timing information for periodic monitoring of the at least one other network node operating in discontinuous transmission mode may be specific to one or more monitoring actions comprising: detecting downlink discovery signals; periodically measuring downlink discovery signals; and reporting measurements of downlink discovery signals from the at least one mobile station to the at least one first network node.

Thereby, further flexibility is provided during the periodic monitoring operation of the mobile station, as different timing information such as different periodicity may be applied for different monitoring operations, leading to increased system efficiency.

In a seventh possible implementation of the method according to the second aspect, or any previous implementation, the timing information associated with periodic monitoring operation of the at least one other network node operating in discontinuous transmission mode, to be received by the at least one mobile station may be signalled via higher layer Radio Resource Control signalling and/ or via a physical layer downlink control channel.

An advantage of this implementation comprises increased flexibility in the signalling of timing information.

In an eighth possible implementation of the method according to the second aspect, or any previous implementation, the transmitted signal may be mobile station specific, or mobile stations group specific.

This flexibility enhancing feature has the further advantage of addressing e.g. all, or a subset of all mobile stations within a cell when transmitting the signal comprising timing information. Thereby signalling overhead for controlling the periodic monitoring operation of the mobile stations in the cell is decreased. Thus processing efforts, signalling power and network signalling capacity in the downlink is reduced, due to less overhead signalling, which enhance system throughput and saves energy consumption at the mobile station side. Also downlink signal interference is somewhat reduced due to the reduced downlink signalling.

In a ninth possible implementation of the method according to the second aspect, or any previous implementation, the timing information for periodic monitoring of the at least one other network node operating in discontinuous transmission mode may be determined based on at least one downlink signal transmitted by the at least one other network node to be monitored, during a dormant state.

Thus brief but precise periodic monitoring time for the mobile station is provided, distributed to the periodic occasions when the other network node transmits signals, the battery operative time of the mobile station is prolonged while periodical monitoring may be achieved by the mobile station with enhanced performance.

In a tenth possible implementation of the method according to the second aspect, or any previous implementation, the method further comprises receiving, from the mobile station, an indication of a set of timing information for periodically monitoring the at least one other network node operating in discontinuous transmission mode, which set has been selected by the mobile station. Further, the action of determining timing information for periodic monitoring may be based on the received indication of the set of timing information for periodically monitoring the at least one other network node operating in discontinuous transmission mode. An advantage by enabling the mobile station to determine timing information and provide an indication of such timing information to the first network node is that the monitoring operation of the individual mobile station may be adapted to individual constraints, requirements or performance of the mobile station. For example, monitoring action may be inhibited when the user of the mobile station is stationary at his/ her home at night time etc. Thus processing efforts and thereby time and battery power is saved in the mobile station, providing prolonged battery operative time of the mobile station without loss of user experienced performance.

According to another further aspect, a mobile station according to claim 11 is provided.

Thereby, timely and energy-efficient cell detection and periodic monitoring such as signal measurements at the mobile station are assured, when other network nodes in the wireless communication network may operate in a low-duty cycle discontinuous transmission mode. Further, by enabling a brief periodic monitoring time for the mobile station, distributed to the periodic occasions when the other network node transmits signals, energy is saved and the battery operative time of the mobile station is prolonged.

The mobile station comprises a processor which is configured for selecting a set of timing information for monitoring the at least one other network node operating in discontinuous transmission mode. Also, the mobile station further comprises a transmitter, configured for transmitting an indication of the selected set of timing information, to at least one first network node.

An advantage by enabling the mobile station to select a set of timing information and provide an indication of such timing information to the first network node is that the monitoring operation of the individual mobile station may be adapted to individual constraints, requirements and/ or performance of the mobile station. For example, monitoring action may be inhibited when the user of the mobile station is stationary at his/ her home at night time etc. Thus processing efforts and thereby time and battery power is saved in the mobile station, providing prolonged battery operative time of the mobile station without loss of user experienced performance.

According to another possible implementation of the mobile station according to the further aspect or any implementation thereof, the processor may be additionally configured for selecting the set of timing information based on energy status of the mobile station.

An advantage with such implementation is that the mobile station autonomously may determine to reduce monitoring actions, perform periodic monitoring with increased timing interval or even inhibit periodical monitoring actions based on energy status such as remaining battery level of the mobile station. Thereby, the remaining power in a low battery scenario may be saved for prioritised actions such as making a potentially lifesaving emergency phone call, instead of periodic monitoring of other network nodes. Thus energy may be saved at the mobile station, when it is needed the most.

According to yet another further aspect, a method according to claim 14 is provided.

An advantage thereby provided is that, timely and energy-efficient cell detection and periodic monitoring at the mobile station are assured, when other network nodes in the wireless communication network operates in a low-duty cycle discontinuous transmission mode. Further, by enabling a brief periodic monitoring time for the mobile station, distributed to the periodic occasions when the other network node transmits signals, energy is saved and the battery operative time of the mobile station is prolonged.

The method also comprises selecting a set of timing information for monitoring the at least one other network node operating in discontinuous transmission mode. The method also comprises transmitting an indication of the selected set of timing information, to at least one first network node.

An advantage by enabling the mobile station to select a set of timing information and provide an indication of such timing information to the first network node is that the monitoring operation of the individual mobile station may be adapted to individual constraints, requirements and/ or performance of the mobile station. For example, monitoring action may be inhibited when the user of the mobile station is stationary at his/ her home at night time etc. Thus processing efforts and thereby time and battery power is saved in the mobile station, providing prolonged battery operative time of the mobile station without loss of user experienced performance.

According to another possible implementation of the mobile station method according to the further aspect, or any previous implementation thereof, the selection of the set of timing information may be made based on energy status of the mobile station.

An advantage with such implementation is that the mobile station autonomously may determine to reduce monitoring actions, perform periodic monitoring with increased timing interval or even inhibit monitoring actions based on energy status such as remaining battery level of the mobile station. Thereby, the remaining power in a low battery scenario may be saved for prioritised actions such as making a potentially lifesaving emergency phone call, instead of periodic monitoring of other network nodes. Thus energy may be saved at the mobile station, when it is needed the most.

By enabling the mobile station to periodically monitoring another network node, operating in discontinuously transmission mode, i.e., a long dormant state with limited transmission/ reception capabilities followed by a short active time, it is assured that the mobile station is enabled to fast and securely detect the other network node. Energy is saved at the mobile station by restricting the periodical monitoring to periods when the other network node actually or potentially transmits signals. Thereby only a brief detection period may be required for the mobile station to detect the other network node, and possibly perform signal measurements of signals transmitted periodically by the other network node.

Thereby, energy is saved at the mobile station, which may prolong the battery activity time between re-charge. Also, the reduced signalling within the communication system generates less uplink interference within the wireless communication system. Thereby an improved performance within the wireless communication system is provided, while the energy consumption is reduced, both at the network side by setting any, or some, network nodes in discontinuous transmission mode, and at the mobile station.

Other objects, advantages and novel features of the described aspects will become apparent from the following detailed description.

### BRIEF DESCRIPTION OF THE DRAWINGS

Various embodiments are described in more detail with reference to attached drawings, illustrating various examples of embodiments in which:
- **Figure 1**: is a block diagram illustrating a wireless communication network according to some embodiments.
- **Figure 2**: is a block diagram illustrating a network node operating in DTX mode, transmitting DRS in periodic bursts.
- **Figure 3**: is a block diagram illustrating a mobile station configured to monitor two other network nodes operating in DTX mode.
- **Figure 4**: is a block diagram illustrating a mobile station configured to monitor another network nodes operating in DTX mode.
- **Figure 5**: is a block diagram illustrating a mobile station configured to monitor another network nodes operating in DTX mode.
- **Figure 6**: is a flow chart illustrating a method in a first network node according to an embodiment.
- **Figure 7**: is a block diagram illustrating a first network node according to an embodiment.
- **Figure 8**: is a flow chart illustrating a method in a mobile station according to an embodiment.
- **Figure 9**: is a block diagram illustrating a mobile station according to an embodiment.

### DETAILED DESCRIPTION

Embodiments of the invention described herein are defined as a first network node, a method in a first network node, a mobile station and a method in a mobile station, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

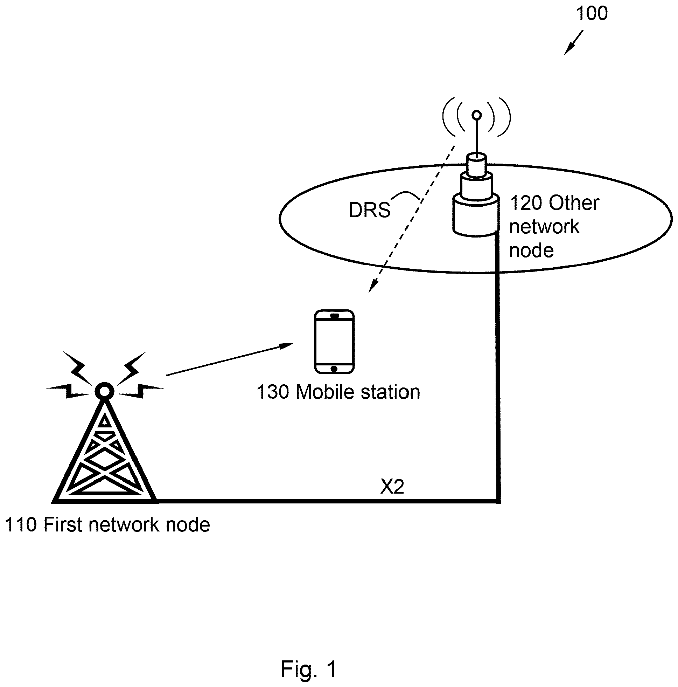

**Figure** 1 is a schematic illustration over a wireless communication network **100** comprising a first network node **110,** another network node **120** operating in DTX mode and a mobile station **130.** The mobile station 130 may be served by the first network node 110, thereby being connected to the wireless communication network 100.

The wireless communication network 100 may at least partly be based on radio access technologies such as, e.g., 3GPP LTE, LTE-Advanced, Evolved Universal Terrestrial Radio Access Network (E-UTRAN), Universal Mobile Telecommunications System (UMTS), Global System for Mobile Communications (originally: Groupe Special Mobile) (GSM)/ Enhanced Data rate for GSM Evolution (GSM/EDGE), Wideband Code Division Multiple Access (WCDMA), Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), just to mention some few options. The expressions "wireless communication network", "wireless communication system" and/ or "cellular telecommunication system" may within the technological context of this disclosure sometimes be utilised interchangeably.

The wireless communication network 100 may be configured to operate according to the Time Division Duplex (TDD) and/ or the Frequency Division Duplex (FDD) principle, according to different embodiments.

TDD is an application of time-division multiplexing to separate uplink and downlink signals in time, possibly with a Guard Period (GP) situated in the time domain between the uplink and downlink signalling. FDD means that the transmitter and receiver operate at different carrier frequencies.

The purpose of the illustration in Figure 1 is to provide a simplified, general overview of the wireless communication network 100 and the involved methods and nodes, such as the first network node 110, the other network node 120 and the mobile station 130 herein described, and the functionalities involved. The methods, network nodes 110, 120, and mobile station 130 will subsequently, as a non-limiting example, be described in a 3GPP LTE/ LTE-Advanced environment. However the disclosed embodiments may operate in a wireless communication network 100 based on another access technology such as, e.g., any of the above already enumerated. Thus, although the embodiments of the invention are described based on, and using the lingo of, 3GPP LTE systems, it is by no means limited to 3GPP LTE. Further, the terms radio network node, network node, base station, and cell may be used interchangeably in the sequel.

The illustrated first network node 110 comprised in the wireless communication network 100 may send and receive radio signals in order to communicate wirelessly with the mobile station 130. The other network node 120 is operating in discontinuous transmission mode and may thus sporadically and/ or periodically transmit Discovery Reference Signals (DRS).

The first network node 110 may have knowledge about the other network node 120, and the periodicity of active/ dormant periods of the other network node 120 and/ or time-frequency characteristics, such as periodicity, of transmitted DRS signals, or other reference signals, pilot signals or synchronization signals of the other network node 120 e.g. by communicating with the other network node 120 through an X2 connection, or another similar wired or wireless inter-network node communication interface.

In order to assist the mobile station 130 to monitor the other network node 120, the first network node 110 may send a signal comprising timing information to be received by the mobile station 130. Such timing information may comprise e.g. an indication of the reactivation time of the other network node 120, as the other network node 120 is enabled with a discontinuous transmission mode; a starting time describing when to start monitor; a monitoring periodicity; a monitoring window and/ or a monitoring ending time.

The signal comprising the timing information is received by the mobile station 130. Then, based on the received information, the mobile station 130 may start monitoring the other network node 120 operating in discontinuous transmission mode according to the received signal.

It is to be noted that the illustrated network setting of one instance of the first network node 110, one instance of the other network node 120 and one mobile station 130 in Figure 1 is to be regarded as a non-limiting example of an embodiment only. The wireless communication network 100 may comprise any other number and/ or combination of the discussed network nodes 110, 120 and/ or mobile stations 130. A plurality of mobile stations 130 and another configuration of network nodes 110, 120 may thus be involved in some embodiments of the disclosed invention. When reference is made herein to "the other network node 120", the at least one other network node 120 may comprise a set of a plurality of other network nodes, according to some embodiments.

Thus whenever "one" or "a/ an" first network node 110, other network node 120 and/ or mobile station 130 is referred to in the present context, a plurality of the first network node 110, and/ or other network nodes 120 and/ or mobile stations 130 may be involved, according to some embodiments.

Further, the first network node 110 and the other network node 120, according to some embodiments, may be configured for downlink transmission and uplink reception, and may be referred to, respectively, as e.g., a base station, a NodeB, an evolved Node Bs (eNB, or eNode B), a base transceiver station, an Access Point Base Station, a base station router, a Radio Base Station (RBS), a micro base station, a pico base station, a femto base station, a Home eNodeB, a sensor, a beacon device, a relay node, a repeater or any other network node configured for communication with the mobile station 130 over a wireless interface, depending, e.g., of the radio access technology and/ or terminology used.

The mobile station 130 may correspondingly be represented by, e.g. a wireless communication terminal, a mobile cellular phone, a Personal Digital Assistant (PDA), a wireless platform, a user equipment, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate wirelessly with the first network node 110 and/ or the other network node 120, according to different embodiments and different vocabulary.

Some embodiments of the invention may define a modular implementation approach, and make it possible to reuse legacy systems such as e.g. standards, algorithms, implementations, components and products.

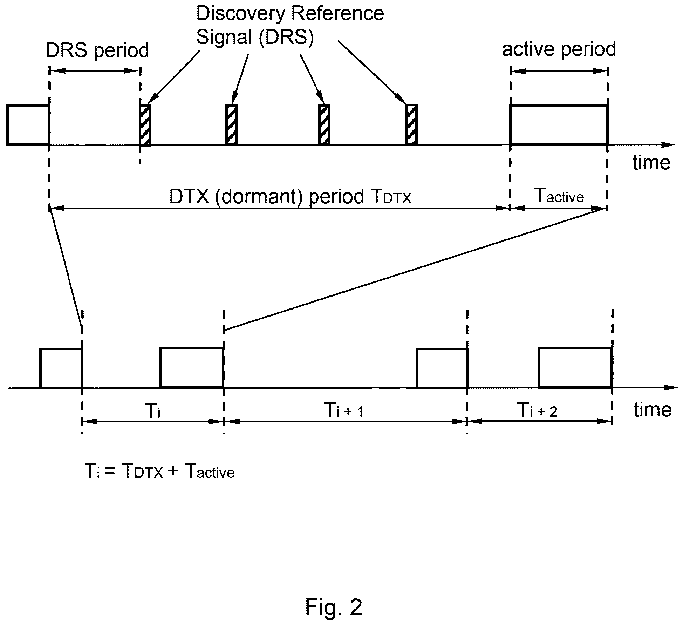

The other network node 120 is enabled to operate in a discontinuous transmission (DTX) mode comprising a dormant period (a.k.a. "off-state") with limited transmission/ reception capabilities, followed by an active period as illustrated in **Figure 2****.**

**Figure 2** illustrates another network node 120 transmitting Discovery Reference Signals (DRS) in periodic bursts during a discontinuously transmission. During the dormant period, the other network node 120 may be enabled to transmit downlink reference signals, a.k.a. Discovery Reference Signals (DRS) intended to aid mobile stations 130 to detect the presence of the dormant node 120 and perform RRM measurements. Without loss of generality, it is here assumed that DRS are transmitted in short bursts of *N* ms, with a period of *M* ms, where *N and M* are arbitrary numbers and *N* ≤ *M*. The DRS signals transmitted by different network nodes 120 can further be time-multiplexed by an offset of *Q* ms. With respect to the terminology used in the related art LTE system, the quantities *N, M*, and *Q* can equivalently be expressed in terms of time slots (e.g., of duration 0.5ms), subframes (e.g., of duration 1ms), radio frames (e.g., of duration 10ms), or any arbitrary combination thereof.

In some embodiments, the first network node 110 may be the serving network node for the mobile station 130, while the other network node 120 may be a neighbouring node to which the mobile station 130 could be offloaded or handed over. With respect to the related art LTE system, the first network node 110 may be a primary cell (PCell) providing network assistance to the mobile station 130 (e.g., a macro-eNodeB), while the other network node 120 may be a secondary cell (SCell) such as a pico-eNodeB or a small cell node. The first network node 110 could further be a small cell node coordinating the operation of a cluster of small cell nodes, in some embodiments.

It is a problem of the previously known related art to assure timely and energy-efficient periodically monitoring by the mobile station 130 of other network nodes 120 operating in low duty-cycle discontinuous transmission mode.

According to embodiments described herein, the first network node 110 may trigger and/ or enable and/ or configure a mobile station 130 to periodically monitor at least one other network node 120, which is distinct from the first network node 110, when the other network node 120 is operating in discontinuous transmission (DTX) mode. The first network node 110 may determine timing information for periodic monitoring of the at least one other network node 120 operating in DTX mode based on the time-frequency characteristics of at least one downlink signal transmitted by said at least one network node 120 to be monitored by the mobile station 130, such as DRS. Then, the first network node 110 may transmit a signal comprising said timing information associated with periodic monitoring of the at least one other network node 120 operating in DTX mode to at least one mobile station 130. The mobile station 130, upon receiving the signal from the first network node 110, which comprises timing information associated with periodic monitoring of the at least one other network node 120 operating in DTX mode, may then start periodically monitoring the at least one other network node 120 operating in discontinuous transmission mode according to the timing information comprised in the received signal.

The monitoring operation of the other network nodes 120 by the mobile station 130 may comprise at least one or more actions of: detecting the presence of the other network node 120; perform signal measurements of signal strength of a downlink signal transmitted by the other network node 120; report signals strength measurements from the mobile station 130 to the first network node 110.

Thereby, the mobile station 130 is enabled, based on timing information received from the first network node 110, to monitor another network node 120 in dormant state in DTX mode, in an energy efficient way.

This disclosed method for transmitting timing information, from the first network node 110 to the mobile station 130, intended to trigger, enable, or configure periodic monitoring such as e.g., detection, measurement and report of downlink signals transmitted by at least one other network node 120 operating in discontinuous transmission mode.

The disclosed method in the first network node 110 may further trigger/ enable/ configure the mobile station 130 to periodically monitor the at least one other network node 120, operating in discontinuous transmission mode. The method may comprise determining timing information for periodic monitoring of at least one other network node 120 operating in DTX mode based on the time-frequency characteristics of at least one downlink signal transmitted by said at least one other network node 120 to be monitored. The determined timing information associated with periodic monitoring of the at least one other network node 120 operating in DTX mode to be received by the at least one mobile station 130 may then be transmitted by the first network node 110. The mobile station 130, upon receiving the signal comprising the timing information, may be enabled to monitor the at least one other network node 120.

Periodical monitoring of the other network node 120 operating in DTX mode is here to be understood as one or more actions in the group of: detecting the presence of said one other network node; performing measurements (such as e.g., RRM/ RLM measurements) based on downlink signals transmitted by the other network node 120 in DTX mode; and/ or reporting said measurements of discovery signals from the mobile station 130 to said first network node 110.

According to some embodiments of the method, the signal transmitted by the first network node 110 may trigger the mobile station 130 to perform periodic measurements, and/ or reports of measurements, of downlink (discovery) signals transmitted by the other network node 120 operating in DTX mode. Alternatively, in some embodiments, the signal transmitted by the first network node 110 may configure periodic measurements, and/ or reports of such measurements, of downlink signals, such as e.g. discovery signals, transmitted by the other network node 120 operating in DTX mode based on the time-frequency characteristics of the signals to be monitored.

Further, in some embodiments, equal, or different lengths in time of the periodic measurement interval, and/ or time window may be configured for performing periodic measurements and performing periodic reporting of such measurements.

In some embodiments, periodic measurements and/ or measurement reports of downlink (discovery) signals based on the time-frequency characteristics of the signals to be monitored may be triggered and/ or configured.

Measurements of signals transmitted by the other network node 120 in DTX mode may comprise one or more in the group of: Reference Signal Received Power (RSRP), Reference Signal Received Quality (RSRQ), Reference Signal Strength Indicator (RSSI), Channel State Information (CSI), Channel Quality Indicators (CQI), Signal to Noise and Interference Ratio (SINR), Signal to Noise Ratio (SNR), Signal to Interference Ratio (SIR), or any other appropriate measurement reflecting the strength and/ or quality of a signal, and/ or a ratio between a certain desired signal and undesired interference or noise.

An advantage of the method in some embodiments is to reduce the processing effort of the mobile station 130, to detect the presence of another network node 120 that operates in DTX mode and/ or perform the RRM/ RLM measurements and measurement reports of the associated downlink signals. A further advantage is to enable energy savings at the mobile station 130 by shortening the cell-detection of network nodes 120 operating in DTX mode and the associated RRM/ RLM measurements, as well as by avoiding unnecessary RRM/ RLM measurements.

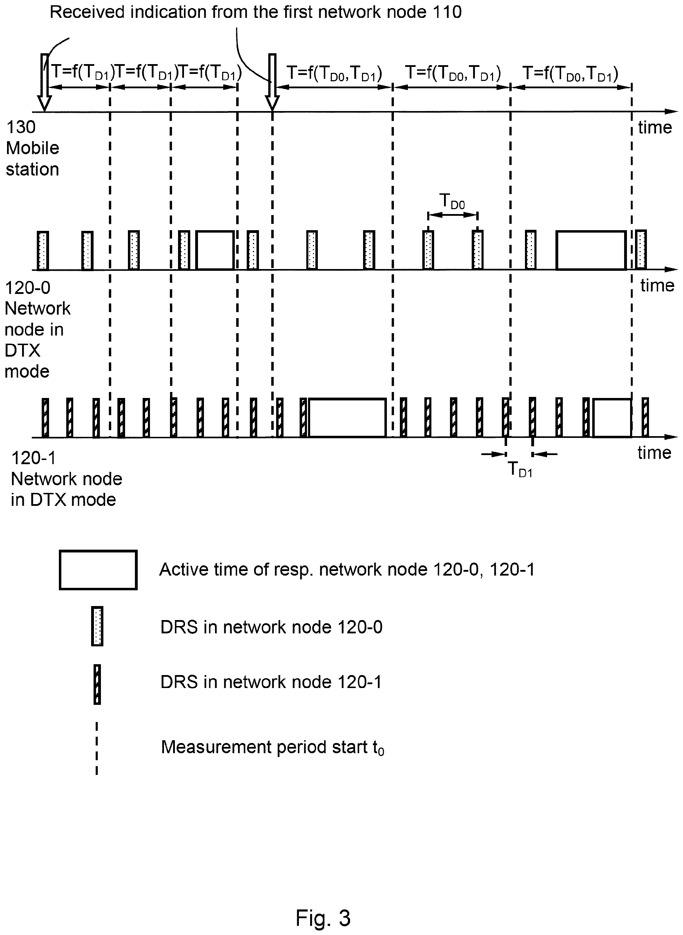

In some embodiments, the timing information for periodic monitoring of at least one other network node 120 operating in DTX mode may be determined based on the time-frequency characteristics of at least one downlink signal transmitted by said at least one other network node 120 to be monitored comprises one or more in the group of: a starting time **t₀**; a monitoring periodicity **T;** a monitoring window **W;** and ending time, as illustrated in **Figure 3****.** One or more of said timing information can be determined on the basis of the time-frequency characteristics of the downlink (discovery) signals transmitted by the at least one other network node 120 in a dormant state to be monitored by the mobile station 130, thereby improving the energy efficiency at the mobile station 130 of the monitoring operation. Thereby, it could be avoided that the mobile station 130 is monitoring the other network node 120 at periods when it is not transmitting any signals.

**Figure 3** illustrates an example of timing information comprising periodicity T, such as e.g., measurement gap repetition period, determined on basis of time-frequency characteristics of at least one downlink signal to be monitored such as a discovery signal.

Information associated with Discovery Reference Signals (DRS) configuration, such as the DRS burst length **N_{D},** the periodicity **T_{D},** a time offset **Q_{D}** among DRS transmitted by multiple other network nodes 120, the type of signal used for discovery, etc., can be exchanged between network nodes 110, 120 over a dedicated interface such as e.g., the X2 interface in an LTE system 100. Therefore, the starting time t₀, and/ or the periodicity T and/ or the time window W configured for the monitoring discovery signals of at least one other network node 120 operating in DTX mode may be expressed as a function of T_{D}, and/ or N_{D}, and/ or Q_{D}, i.e., t₀ = fₜ(T_{D}, N_{D}, Q_{D}), T = f_{T}(T_{D}, N_{D}, Q_{D}) and W = f_{W}(T_{D}, N_{D}, Q_{D}), in some embodiments. For instance, T and W may be expressed proportionally to T_{D} as T = K_{T}T_{D} and W = K_{W}T_{D}, with K_{T} ≥ K_{W}. In one other example, when the mobile station 130 is configured to monitor discovery signals transmitted by plurality of other network nodes 120 operating in DTX mode, the values of the periodicity T and/ or the time window W may depend the characteristic of multiple discovery signals to be monitored. As different other network nodes 120 may transmit downlink (discovery) signals in their dormant state with different time-frequency characteristics, this embodiment enables the mobile station 130 to periodically monitor the at least one other network node 120 operating in DTX mode in a timely and efficient manner based on the time-frequency characteristic of at least one downlink (discovery) signal to be monitored.

Thus Figure 3 illustrates an embodiment where the mobile station 130 is configured with only a monitoring period to detect and/ or measure downlink (discovery) signals transmitted by at least one network node 120-1 operating in DTX mode. When only the periodicity T is provided to the mobile station 130, the staring time t₀ of the monitoring operation is implicitly assumed to coincide with the signal reception. The duration of the monitoring operation within a monitoring period may be autonomously determined by the mobile station 130 itself, in some embodiments. In one example, the mobile station 130 may monitor discovery signals for a short time at the beginning of each monitoring period. In one other example, the mobile station 130 may perform multiple measurements within the monitoring period so as to improve the measurement accuracy. The periodicity T may represent a measurement gap repetition period, thereby reducing the energy consumption at the mobile station 130, while the time window W may represent a measurement gap length. A longer measurement gap repetition period can be signalled to the mobile station 130 to further reduce the energy consumption, as illustrated in Figure 3. Therefore, by determining the periodicity T based on the characteristics of the downlink (discovery) signals to be monitored, the method achieves the desired objectives with low signalling overhead.

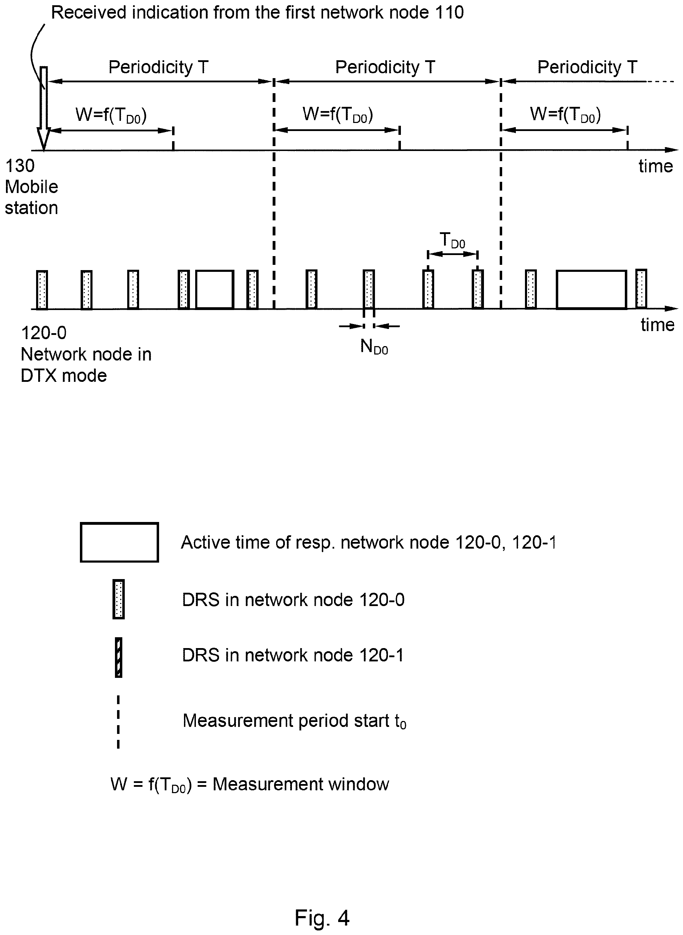

**Figure 4** illustrates an embodiment where the timing information transmitted to the mobile station 130 to periodically monitor downlink (discovery) signals transmitted by the at least one other network node 120 operating in DTX mode may comprise both a monitoring period T and a monitoring time window W determined on the basis of the characteristics of the downlink signals to be monitored. The advantage of this embodiment comprises that the energy consumption of the mobile station 130 is further reduced when periodically monitoring the at least one network node 120 operating in DTX mode.

In a further embodiment, the timing information for periodic monitoring of the at least one other network node 120 operating in DTX mode in addition may comprise a reference to a set of time-frequency resources to monitor within a monitoring period associated to at least on downlink (discovery) signal transmitted by the at least one network node 120 operating in DTX mode to be monitored. Hence, within a monitoring period or within a monitoring window, the mobile station 130 may be configured to detect and/ or measure discovery reference signals and/ or report measurements in certain time-slots, and/ or subframes and/ or radio frames, and/ or resource-elements patterns and/ or time-frequency resource blocks, or a combination thereof, based on the time-frequency characteristics of the signals to be monitored. In one example, the timing information may comprise a bitmap indicating which subframe(s) within each of said radio frame of the monitoring window W or the monitoring period T the mobile station 130 may monitor downlink (discovery) signals transmitted by at least one other network node 120 operating in DTX mode. An advantage of this embodiment is to provide, to the mobile station 130, accurate timing information associated with time-frequency resources to periodically monitor at least one other network node 120 operating in DTX mode, thereby enabling the mobile station 130 to timely and efficiently operate.

In yet an embodiment, one or more parameters related to the timing information for periodically monitoring of at least one other network node 120 operating in DTX mode may further be associated with an individual other network node 120 or a group of other network nodes 120. In one example, the periodicity T and/ or the time window W and/ or the reference to a set of time-frequency resources to monitor signalled to the mobile station 130 may be associated with one, or a plurality of other network nodes 120 operating in DTX mode. In addition, some parameters may be common for periodically monitoring a group of network nodes 120-0, 120-1, while others may be associated with periodical monitoring of an individual network node 120 operating in DTX mode. This has the advantage of making the monitoring operation of the mobile station 130 more flexible, and is also a convenient and resource effective manner of providing the parameters to the mobile station 130.

In another embodiment, the timing information associated with periodic monitoring operation of the at least one other network node 120 operating in DTX mode, to be received by the mobile station 130 is related to one or multiple component carriers. In other words, when the mobile station 130 is configured to monitor discovery signals on multiple component carriers, e.g., for inter-frequency and/ or intra-frequency DRS detection and/ or measurements, different (or common) timing information may be signalled to monitor different component carriers. The timing information may therefore be specific to one or a plurality of component carriers in some embodiments.

The timing information may in some embodiments be related to the periodical monitoring operating in one, or a plurality of component carriers may be determined on the basis of the timing of discovery signals transmitted in each individual, or group of, component carrier(s) by at least one other network node 120 operating in DTX mode. Thereby, precise timing and frequency information related to at least one other network node 120 operating in DTX mode may be provided to the mobile station 130 to monitor discovery signals associated with at least one other network node 120 operating in DTX mode.

In yet a further embodiment, the timing information for periodic monitoring at least one other network node 120 operating in DTX mode may be specific to one or more monitoring actions, such as: detecting downlink discovery signals; periodically measuring downlink discovery signals; and reporting measurements of downlink discovery signals from the mobile station 130 to said first network node 110. Different such monitoring actions may be configured with and/ or triggered by different timing information in some embodiments. However, in some embodiments, all or some of the enumerated monitoring actions may be configured with and/ or triggered by common timing information. Further, these two embodiments may be combined, such that some monitoring actions may be configured with and/ or triggered by common timing information while at least some monitoring action may be configured with and/ or triggered by different timing information from the other monitoring actions.

In one non-limiting example of the latter, a common set of timing parameters may be configured for detecting and measuring DRS (e.g., t_{0,d}, T_{d}, W_{d}), while an additional set of parameters may be configured for periodically reporting measurements of DRS from the mobile station 130 to the first network node 110 (e.g., t_{0,r}, Tᵣ, Wᵣ), respectively. Thereby, a flexible and adaptive configuration structure is provided, enabling optimisation of the length in time for each distinct monitoring action.

In another additional embodiment, the timing information timing associated with periodic monitoring operation of the at least one other network node 120, operating in DTX mode to be received by the mobile station 130 may be signalled via higher layer Radio Resource Control (RRC) signalling and/ or via physical layer downlink control channel, such as e.g., Physical Downlink Control Channel (PDCCH) and/ or enhanced PDCCH (ePDCCH) in LTE. In particular, part of said timing information may be semi-statically configured via higher layer Radio Resource Control (RRC) signalling, while part of the timing information may be dynamically configured with the physical layer downlink control channel.

In one example, the timing information may comprise a set of monitoring periodicities {T₁, T₂, ..., T_{K}} and/ or a set of monitoring windows {W₁, W₂, ..., W_{K}} semi-statically configured via higher layer RRC signalling. In addition to this information, the first network node may further signal to the mobile station which periodicity Tᵢ and/ or which time window Wⱼ in the sets to apply to monitor at least one other network node operating in discontinuous transmission mode through a physical downlink control channel; wherein i, j and k are arbitrary positive integers where 0 ≤ i ≤ k; 0 ≤ j ≤ k; while 0 ≤ k ≤ ∞. Further, different values on the index k may be utilised in the set of monitoring periodicities T, than in the set of monitoring windows W, in some embodiments.

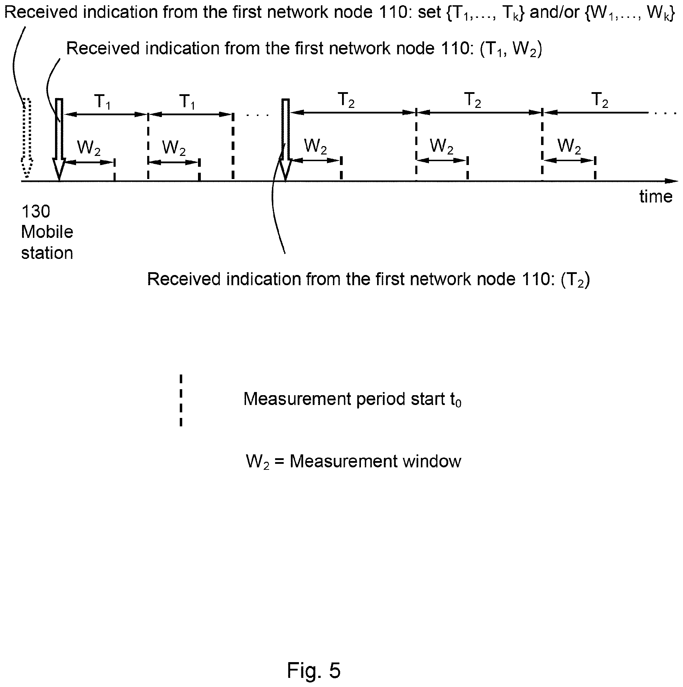

Thus, a new configuration of timing information may be transmitted as part of the Downlink Control Information (DCI). In combination with any other of the herein described embodiments, the DCI may carry separate timing information, such as e.g., Tᵢ and Wⱼ associated with distinct other network nodes 120, or a group of other network nodes 120 operating in DTX mode as illustrated in **Figure 5****.**

**Figure 5** illustrates an example of semi-static and dynamic signalling of timing information related to periodic measurements of discovery signals of the at least one other network node 120 operating in DTX mode.

In other additional embodiments, said timing information may be transmitted in a mobile station-specific or mobile station-group specific manner. A benefit of this embodiment is that triggering and/ or configuring of the monitoring operation of a plurality of mobile stations 130 is enabled by transmitting one single, common signal. Thereby signalling overhead is reduced. A second advantage is that triggering and/ or configuring of the monitoring operation of an individual mobile station 130 may be made separately, thereby enabling adaptive periodical monitoring configuration and/ or triggering of individual mobile stations 130 to optimize the associated energy consumption of the respective individual mobile station 130.

In yet a further embodiment, the method in the mobile station 130 may comprise the actions of selecting one set of timing information out of a plurality of sets of timing information for periodically monitoring network nodes 120 operating in DTX mode. The plurality of sets of timing information may have been preconfigured into the mobile station 130, or may have been received from the first network node 110 in different embodiments. Also, an indication of the selected set of timing information for periodically monitoring at least one other network node 120 operating in DTX mode may be transmitted from the mobile station 130 to the first network node 110.

The described embodiment has the advantage of enabling the mobile station 130 to autonomously determine the most appropriate configuration for periodically monitoring other network nodes 120 operating in DTX mode in order, for instance, to minimize the energy consumption at the mobile station 130. In one example, the mobile station 130 may select a preferred and/ or an accepted set of timing parameters such as e.g., a monitoring period T and/ or a timing window W, based on its energy status, i.e. remaining battery power of the mobile station 130. The mobile station 130 may further select a preferred and/ or accepted set of time-frequency resources to monitor. When a preference for a set of timing parameters is indicated by the mobile station 130 to the first network node 110, the first network node 110 may still determine a different set of timing parameters to be transmitted to the mobile station 130.

In some embodiments, the mobile station 130 may select timing parameters such that the length of the monitoring period T may be inversely proportional to the amount of remaining battery power of the mobile station 130, and/ or the length of the timing window W may be inversely proportional to the remaining battery power of the mobile station 130. Thereby, monitoring action of the mobile station 130 may be reduced, or even inhibited when the remaining battery power of the mobile station 130 is low, i.e. lower than a predetermined threshold level, which saves the remaining battery power of the mobile station 130 for instead performing more prioritised tasks. Thereby the operational time between battery re-charge of the mobile station 130 may be extended. Also, the user experience of the mobile station 130 may be somewhat enhanced.

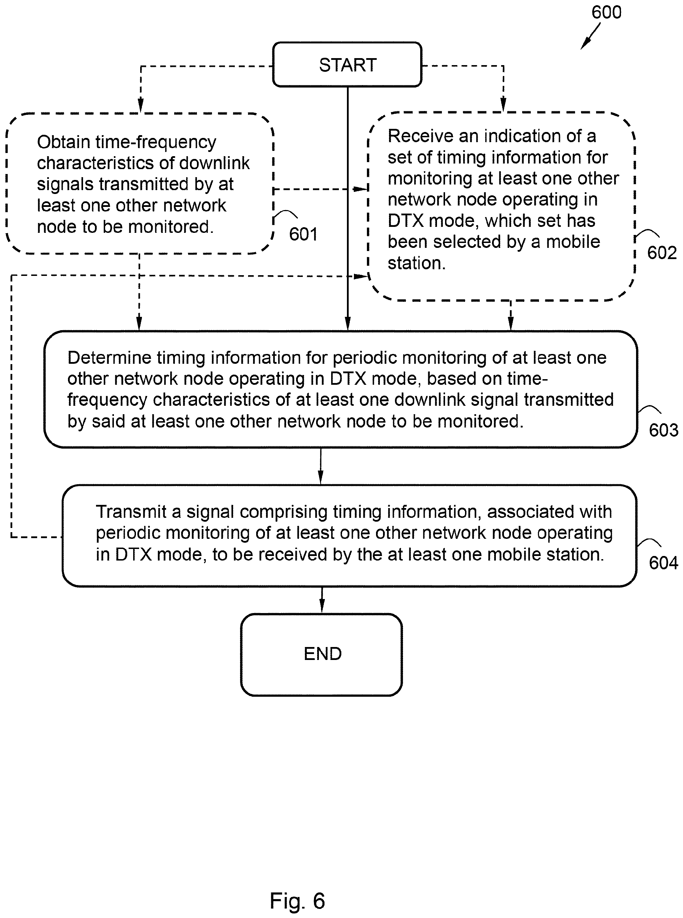

**Figure 6** is a flow chart illustrating embodiments of a method **600** for use in a first network node 110, for providing timing information concerning at least one other network node 120 to at least one mobile station 130. The at least one other network node 120 is operating in discontinuous transmission (DTX) mode.

The timing information may comprise at least one of: a starting time t₀, a monitoring periodicity T, a monitoring window W and an ending time, for example. Further, in some embodiments, the timing information may comprise a reference to a set of time-frequency resources, such as a bitmap indicating a set of subframes, and/ or a set of resource blocks, to monitor.

Furthermore, the one or more timing information for periodically monitoring the at least one other network node 120 operating in DTX mode is associated with an individual network node 120, or a group of network nodes 120-0, 120-1 in some embodiments.

Additionally, the timing information associated with periodic monitoring of the at least one other network node 120 operating in DTX mode, concerns one or multiple component carriers.

The provided timing information enables the mobile station 130 to monitor the at least one other network node 120 in a wireless communication network 100. The at least one other network node 120 may comprise a set of a plurality of other network nodes 120-0, 120-1 in some embodiments.

The timing information for periodic monitoring of the at least one other network node 120 operating in DTX mode may be specific to one or more monitoring actions comprising e.g.: detecting downlink discovery signals; periodically measuring downlink discovery signals; and/ or reporting measurements of downlink discovery signals from the at least one mobile station 130 to at least one network node 110, 120.

The mobile station 130 may be served by the first network node 110 in a heterogeneous wireless communication system 100 comprising the first network node 110 and at least one other network node 120.

The wireless communication network 100 may be based on 3GPP LTE. Further, the wireless communication system 100 may be based on FDD or TDD in different embodiments. The first network node 110 and/ or the other network node 120 may comprise an evolved NodeB (eNodeB) according to some embodiments.

To appropriately provide the timing information of at least one other network node 120, operating in discontinuous transmission mode, to the mobile station 130, the method 600 may comprise a number of actions **601-604.** It is however to be noted that any, some or all of the described actions 601-604, may be performed in a somewhat different chronological order than the enumeration indicates, be performed simultaneously or even be performed in a completely reversed order according to different embodiments. Further, it is to be noted that some actions may be performed in a plurality of alternative manners according to different embodiments, and that some such alternative manners may be performed only within some, but not necessarily all embodiments. The method 600 may comprise the following actions:

### Action 601

The time-frequency characteristics of downlink signals transmitted by the at least one other network node 120 to be monitored, may be obtained.

In some embodiments, the first network node 110 may obtain the time-frequency characteristics e.g. over an intra-radio network node connection from the other network node 120, such as S1 and/ or X2.

Timing information, associated with the state switch between dormant state and active state of the at least one other network node 120 may be obtained. In some embodiments, such information may be obtained e.g. over an intra-radio network node connection from the other network node 120, such as S1 and/ or X2.

### Action 602

An indication of a set of timing information for periodically monitoring the at least one other network node 120 operating in DTX mode may be received from the mobile station 130.

The received set of timing information may have been selected by the mobile station 130, and may comprise a preferred and/ or an accepted set of timing parameters such as e.g., a monitoring period T and/ or a timing window W, and/ or a set of time-frequency resources to monitor, selected by the mobile station 130 based on the energy status, i.e. remaining battery power of the mobile station 130.

### Action 603

Timing information for periodic monitoring of the at least one other network node 120 operating in DTX mode is determined, based on time-frequency characteristics of at least one downlink signal transmitted by the at least one other network node 120 to be monitored.

The determination of timing information for periodic monitoring may be further based on the received 602 indication of said set of timing information for periodically monitoring the at least one other network node 120 operating in DTX mode.

The timing information for periodic monitoring of the at least one other network node 120 operating in DTX mode may be determined based on at least one downlink signal transmitted by said at least one other network node 120 to be monitored, during a dormant state.

### Action 604

A signal comprising the timing information, associated with periodic monitoring of the at least one other network node 120 operating in discontinuous transmission mode is transmitted to the at least one mobile station 130.

The timing information associated with periodic monitoring operation of the at least one other network node 120 operating in DTX mode, to be received by the at least one mobile station 130 may be signalled/ transmitted via higher layer Radio Resource Control signalling and/ or via a physical layer downlink control channel, such as PDCCH or ePDCCH.

Furthermore, the transmitted signal may be mobile station specific, or mobile stations group specific in different embodiments.

In some embodiments, the mobile station 130 may be semi-statically configured by the first network node 110 with one or multiple sets of potential monitoring parameters, and the mobile station 130 may select a preferred or accepted set and transmit an indication of its selected preference to the first network node 110.

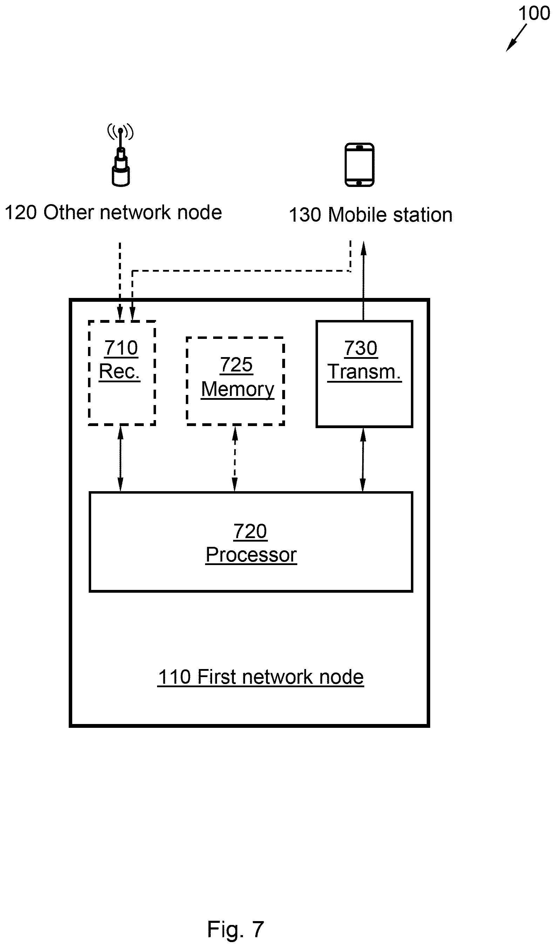

**Figure 7** illustrates an embodiment of a first network node 110, configured for wireless communication in a wireless communication system 100. The first network node 110 is further configured for performing the method 600 according to at least some of the previously described actions 601-604 for providing timing information concerning at least one other network node 120, operating in discontinuous transmission (DTX) mode, for enabling a mobile station 130 to monitor the at least one other network node 120. The at least one other network node 120 may comprise a set of a plurality of other network nodes 120-0, 120-1 in some embodiments. Further, the transmitted signal may be mobile station specific, or mobile stations group specific in different embodiments.

The timing information may comprise at least one of: a starting time t₀, a monitoring periodicity T, a monitoring window W and an ending time, for example. Further, in some embodiments, the timing information may comprise a reference to a set of time-frequency resources, such as a bitmap indicating a set of subframes, and/ or a set of resource blocks, to monitor.

Furthermore, the one or more timing information for periodically monitoring the at least one other network node 120 operating in DTX mode is associated with an individual network node 120, or a group of network nodes 120-0, 120-1 in some embodiments.

Additionally, the timing information associated with periodic monitoring of the at least one other network node 120 operating in DTX mode, concerns one or multiple component carriers.

The provided timing information enables the mobile station 130 to monitor the at least one other network node 120 in a wireless communication network 100. The at least one other network node 120 may comprise a set of a plurality of other network nodes 120-0, 120-1 in some embodiments.

The timing information for periodic monitoring of the at least one other network node 120 operating in DTX mode may be specific to one or more monitoring actions comprising e.g.: detecting downlink discovery signals; periodically measuring downlink discovery signals; and/ or reporting measurements of downlink discovery signals from the at least one mobile station 130 to at least one network node 110, 120.

The mobile station 130 may be served by the first network node 110 in a heterogeneous wireless communication system 100 comprising the first network node 110 and at least one other network node 120.

The wireless communication network 100 may be based on 3GPP LTE. Further, the wireless communication system 100 may be based on FDD or TDD in different embodiments. The first network node 110 and/ or the other network node 120 may comprise an evolved NodeB (eNodeB) according to some embodiments.

For enhanced clarity, any internal electronics or other components of the first network node 110, not completely indispensable for understanding the herein described embodiments have been omitted from Figure 7.

Further, the first network node 110 comprises a processor **720,** configured for determining timing information for periodic monitoring of the at least one other network node 120 operating in DTX mode, based on time-frequency characteristics of at least one downlink signal transmitted by said at least one other network node 120 to be monitored.

The processor 720 may be further configured for obtaining time-frequency characteristics of downlink signals transmitted by the at least one other network node 120 to be monitored in some embodiments.

Such processor 720 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

The first network node 110 also comprises a transmitter **730,** configured for transmitting a signal comprising timing information, associated with periodic monitoring of said at least one other network node 120 operating in DTX mode, to the at least one mobile station 130.

Further, the first network node 110 may comprise a processor **720,** configured for obtaining timing information, associated with the state switch between dormant state and active state of the at least one other network node 120, according to some embodiments.

The processor 720 may optionally be further configured for determining timing information for the periodic monitoring of the at least one other network node 120 operating in DTX mode, based on a received indication of the set of timing information, received from the mobile station 130.

In addition, the processor 720 may furthermore be configured for determining the timing information for periodic monitoring of the at least one other network node 120 operating in DTX mode, based on time-frequency characteristics of at least one downlink signal transmitted by the at least one other network node 120 to be monitored, during a dormant state of the at least one other network node 120 operating in DTX mode.

Such processor 720 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

In further addition, the first network node 110 may comprise a receiver **710,** configured for receiving signals from other network nodes 120 and/ or the mobile station 130 over a wired or wireless interface according to some embodiments.

In an embodiment, the receiver 710 may be configured for receiving, from at least one mobile station 130, an indication of a set of timing information for monitoring the at least one other network node 120 operating in DTX mode, which set has been selected by the mobile station 130.

Furthermore, the first network node 110 may further comprise at least one memory **725,** according to some embodiments. The optional memory 725 may comprise a physical device utilised to store data or a program, i.e., a sequence of instructions, on a temporary or permanent basis. According to some embodiments, the memory 725 may comprise integrated circuits comprising silicon-based transistors. Further, the memory 725 may be volatile or non-volatile.

Some or all of the above described actions 601-604 to be performed in the first network node 110 may be implemented through the one or more processors 720 in the first network node 110, together with a computer program product for performing at least some of the functions of the actions 601-604. Thus a computer program comprising program code may perform a method 600 according to any, at least some, or all of the functions of the actions 601-604 for providing timing information concerning the at least one other network node 120, from the first network node 110, concerning at least one other network node 120, operating in DTX mode, to the mobile station 130 for enabling the mobile station 130 to periodically monitoring the at least one other network node 120, when the computer program is loaded into a processor 720 of the first network node 110.

Further, a computer program product may comprise a computer readable storage medium storing program code thereon for use by a first network node 110, for providing timing information concerning at least one other network node 120, operating in DTX mode, for enabling the mobile station 130 to monitor the at least one other network node 120, wherein the program code comprising instructions for executing the method 600 comprising: determining 603 timing information for periodic monitoring of said at least one other network node 120 operating in discontinuous transmission mode, based on time-frequency characteristics of at least one downlink signal transmitted by said at least one other network node 120 to be monitored; and transmitting 604 a signal comprising said timing information, associated with periodic monitoring of said at least one other network node 120 operating in DTX mode, to the at least one mobile station 130.

The computer program product mentioned above may be provided for instance in the form of a data carrier carrying computer program code for performing at least some of the actions 601-604 according to some embodiments when being loaded into the processor 720. The data carrier may be, e.g., a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the first network node 110 remotely, e.g., over an Internet or an intranet connection.

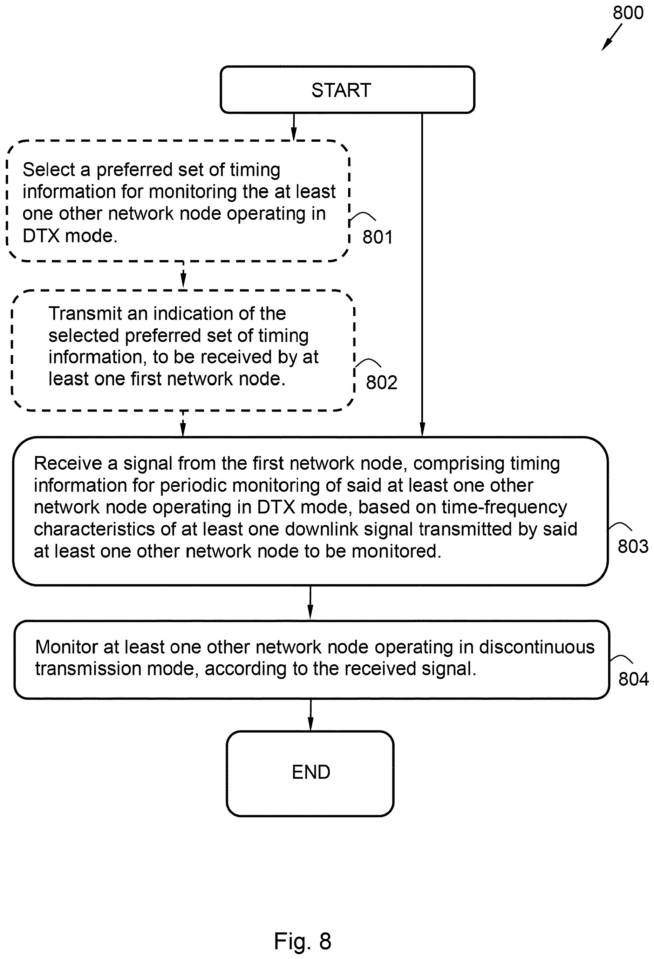

**Figure 8** is a flow chart illustrating embodiments of a method **800** for use in a mobile station 130 for, based on timing information received from a first network node 110, periodically monitoring at least one other network node 120, operating in discontinuous transmission (DTX) mode.

To appropriately monitor the at least one other network node 120, the method 800 may comprise a number of actions **801-804.** It is however to be noted that any, some or all of the described actions 801-804, may be performed in a somewhat different chronological order than the enumeration indicates, be performed simultaneously or even be performed in a completely reversed order according to different embodiments. Also, some actions such as e.g. actions 801 and/ or 802 may be performed only within some alternative embodiments. Further, it is to be noted that some actions may be performed in a plurality of alternative manners according to different embodiments, and that some such alternative manners may be performed only within some, but not necessarily all embodiments. The method 800 may comprise the following actions:

### Action 801

This action may be performed within some, but not necessarily all embodiments of the method 800.

A set of timing information for monitoring the at least one other network node 120 operating in DTX mode may be selected.

The selected set of timing information by the mobile station 130 may be associated with periodically monitoring, and may comprise a preferred and/ or an accepted set of timing parameters such as e.g., a monitoring period T and/ or a timing window W. The selection of the set of timing information may be made based on energy status such as remaining battery power of the mobile station 130.

The set of timing parameters may be pre-configured, or semi-statically provided by the first network node 110 in different embodiments.

### Action 802

This action may be performed within some embodiments of the method 800, wherein the action 801 has been performed.

An indication of the selected 801 set of timing information is transmitted to at least one first network node 110.

### Action 803

A signal is received from the first network node 110, comprising timing information for periodic monitoring of the at least one other network node 120 operating in DTX mode, based on time-frequency characteristics of at least one downlink signal transmitted by said at least one other network node 120 to be monitored.

### Action 804

The at least one other network node 120 operating in DTX mode is periodically monitored by the mobile station 130, according to the received 803 signal from the first network node 110, comprising timing information for periodic monitoring of the other network node 120 operating in DTX mode, based on time-frequency characteristics of at least one downlink signal transmitted by the other network node 120 to be monitored.

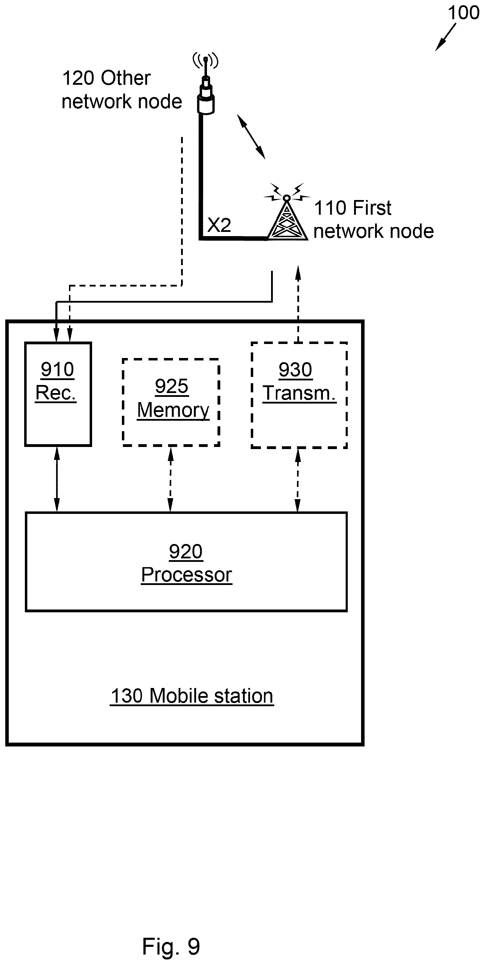

**Figure 9** illustrates an embodiment of a mobile station 130, configured for periodically monitoring at least one other network node 120, operating in discontinuous transmission (DTX) mode, based on timing information received from a first network node 110.

The mobile station 130 is configured for performing the method 800 according to at least some of the previously described actions 801-804 for periodically monitoring at least one other network node 120, operating in DTX mode.

For enhanced clarity, any internal electronics or other components of the mobile station 130, not completely indispensable for understanding the herein described embodiments have been omitted from Figure 9.

The mobile station 130 comprises a receiver **910,** configured for receiving a signal from the first network node 110, comprising timing information for periodic monitoring of the at least one other network node 120 operating in discontinuous transmission mode, based on time-frequency characteristics of at least one downlink signal transmitted by the at least one other network node 120 to be monitored.

The receiver 910 may be configured for receiving radio signals over a wireless interface or alternatively wired signals. The signals may be received from, e.g., the first network node 110, the other network node 120, or any other entity configured for communication within the wireless communication system 100, according to some embodiments.

In addition, the mobile station 130 also comprises a processor **920,** configured for periodically monitoring the at least one other network node 120 operating in DTX mode, according to the received signal. Also, the processor 920 may be configured for selecting a set of timing information for periodically monitoring the at least one other network node 120 operating in DTX mode. Further, according to some embodiments, the processor 920 may be further configured for selecting the set of timing information based on energy status, such as the remaining battery power, of the mobile station 130. The processor 920 may further be configured to initiate the periodical monitoring of the other network node 120 at a moment in time according to the configuration, and for measuring a signal received from the at least one other network node 120.

Such processor 920 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the mobile station 130 also may in some embodiments comprise a transmitter **930,** configured for transmitting an indication of selected set of timing information, to at least one first network node 110. The transmitter 930 may transmit a wireless signal comprising e.g. a signal measurement report comprising measurement data of the signal received from the at least one other network node 120, to be received by the first network node 110. Such signal may be transmitted over a wireless interface.

Furthermore, the mobile station 130 may further comprise at least one memory **925,** according to some embodiments. The optional memory 925 may comprise a physical device utilised to store data or programs, i.e., sequences of instructions, on a temporary or permanent basis. According to some embodiments, the memory 925 may comprise integrated circuits comprising silicon-based transistors. Further, the memory 925 may be volatile or non-volatile.

The above described actions 801-804 to be performed in the mobile station 130 may be implemented through the one or more processors 920 in the mobile station 130, together with computer program product for performing at least some of the functions of the actions 801-804. Thus a computer program product, comprising instructions for performing the actions 801-804 in the mobile station 130 may perform a method 800 comprising at least some of the method actions 801-804, for periodically monitoring at least one other network node 120, operating in DTX mode, when the computer program is loaded into a processor 920 of the mobile station 130.

Thus a computer program product comprising a computer readable storage medium storing program code thereon for use by a mobile station 130 for, based on timing information received from a first network node 110, periodically monitoring at least one other network node 120, operating in DTX mode. The program code may comprise instructions for executing a method 800 comprising: receiving 803 a signal from the first network node 110, comprising timing information for periodic monitoring of said at least one other network node 120 operating in discontinuous transmission mode, based on time-frequency characteristics of at least one downlink signal transmitted by the at least one other network node 120 to be monitored; and periodically monitoring 804 at least one other network node 120 operating in discontinuous transmission mode, according to the received 803 signal.

The computer program product mentioned above may be provided for instance in the form of a data carrier carrying computer program code for performing at least some of the actions 801-804 according to some embodiments when being loaded into the processor 920 of the mobile station 130. The data carrier may be, e.g., a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the mobile station 130 remotely, e.g., over an Internet or an intranet connection.

The terminology used in the description of the embodiments as illustrated in the accompanying drawings is not intended to be limiting of the described methods 600, 800; first network node 110 and/ or mobile station 130. Various changes, substitutions and/ or alterations may be made, without departing from the invention as defined by the appended claims.

As used herein, the term "and/ or" comprises any and all combinations of one or more of the associated listed items. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A first network node (110) for providing timing information concerning at least one other network node (120) to at least one mobile station (130), which first network node (110) comprises:
a processor (720), configured for determining timing information for periodic monitoring of at least one downlink signal transmitted by said at least one other network node (120) operating in discontinuous transmission mode, based on time-frequency characteristics of said at least one downlink signal transmitted by said at least one other network node (120) to be monitored; and
a transmitter (730), configured for transmitting a signal comprising said timing information, associated with periodic monitoring of said at least one downlink signal transmitted by said at least one other network node (120) operating in discontinuous transmission mode, to the at least one mobile station (130);
wherein said timing information comprises at least one of: a starting time (to) of monitoring of said at least one downlink signal, a monitoring periodicity (T) of monitoring of said at least one downlink signal, a monitoring time window (W) of monitoring of said at least one downlink signal, and an ending time of monitoring of said at least one downlink signal;
a receiver (710), configured for receiving, from the at least one mobile station (130), an indication of a set of timing information for periodically monitoring the at least one other network node (120) operating in discontinuous transmission mode, which set has been selected by the mobile station (130); and wherein the processor (720) is further configured for determining timing information for the periodic monitoring of said at least one downlink signal transmitted by said at least one other network node (120) operating in discontinuous transmission mode, based on the received indication of said set of timing information.

2. The first network node (110) according to claim 1, wherein the timing information associated with periodic monitoring of said at least one downlink signal transmitted by said at least one other network node (120) operating in discontinuous transmission mode concerns one or multiple component carriers.

3. The first network node (110) according to any of claims 1-2, wherein the timing information for periodic monitoring of said at least one downlink signal transmitted by said at least one other network node (120) operating in discontinuous transmission mode is specific to one or more monitoring actions comprising: detecting downlink discovery signals; periodically measuring downlink discovery signals; and reporting measurements of downlink discovery signals from the mobile station (130) to at least one network node (110, 120).

4. The first network node (110) according to any of claims 1-3, wherein the timing information associated with periodic monitoring of said at least one downlink signal transmitted by said at least one other network node (120) operating in discontinuous transmission mode, transmitted to the at least one mobile station (130), is signalled via higher layer Radio Resource Control signalling and/ or via a physical layer downlink control channel.

5. The first network node (110) according to any of claims 1-4, wherein the timing information for periodic monitoring of said at least one downlink signal transmitted by said at least one other network node (120) operating in discontinuous transmission mode is determined based on time-frequency characteristics of at least one downlink signal transmitted by said at least one other network node (120) to be monitored, during a dormant state of the at least one other network node (120) operating in discontinuous transmission mode.

6. A method (600) in a first network node (110) for providing timing information concerning at least one other network node (120) to a mobile station (130), the method comprising:
determining (603) timing information for periodic monitoring of at least one downlink signal transmitted by said at least one other network node (120) operating in discontinuous transmission mode, based on time-frequency characteristics of said at least one downlink signal transmitted by said at least one other network node (120) to be monitored; and
transmitting (604) a signal comprising said timing information, associated with periodic monitoring of said at least one downlink signal transmitted by said at least one other network node (120) operating in discontinuous transmission mode, to the at least one mobile station (130);
wherein said timing information comprises at least one of: a starting time (to) of monitoring of said at least one downlink signal, a monitoring periodicity (T) of monitoring of said at least one downlink signal, a monitoring time window (W) of monitoring of said at least one downlink signal, and an ending time of monitoring of said at least one downlink signal;
wherein the method further comprises:
receiving, from the at least one mobile station (130), an indication of a set of timing information for periodically monitoring the at least one other network node (120) operating in discontinuous transmission mode, which set has been selected by the mobile station (130); and
determining timing information for the periodic monitoring of said at least one downlink signal transmitted by said at least one other network node (120) operating in discontinuous transmission mode, based on the received indication of said set of timing information.

7. The method (600) according to claim 6, wherein the timing information associated with periodic monitoring of said at least one downlink signal transmitted by said at least one other network node (120) operating in discontinuous transmission mode concerns one or multiple component carriers.

8. The method (600) according to any of claims 6-7, wherein the timing information associated with periodic monitoring of said at least one downlink signal transmitted by said at least one other network node (120) operating in discontinuous transmission mode, transmitted to the at least one mobile station (130), is signalled via higher layer Radio Resource Control signalling and/ or via a physical layer downlink control channel.

9. The method (600) according to any of claims 6-8, wherein the timing information for periodic monitoring of said at least one downlink signal transmitted by said at least one other network node (120) operating in discontinuous transmission mode is determined based on time-frequency characteristics of at least one downlink signal transmitted by said at least one other network node (120) to be monitored, during a dormant state of the at least one other network node (120) operating in discontinuous transmission mode.

10. A mobile station (130) for, based on timing information received from a first network node (110), periodically monitoring at least one other network node (120) operating in discontinuous transmission mode, which mobile station (130) comprises:
a receiver (910), configured for receiving a signal from the first network node (110), comprising timing information for periodically monitoring at least one downlink signal transmitted by said at least one other network node (120) operating in discontinuous transmission mode, based on time-frequency characteristics of said at least one downlink signal transmitted by said at least one other network node (120) to be monitored; and
a processor (920), configured for periodically monitoring said at least one downlink signal transmitted by said at least one other network node (120) operating in discontinuous transmission mode, according to the received signal;
wherein said timing information comprises at least one of: a starting time (to) of monitoring of said at least one downlink signal, a monitoring periodicity (T) of monitoring of said at least one downlink signal, a monitoring time window (W) of monitoring of said at least one downlink signal, and an ending time of monitoring of said at least one downlink signal;
wherein the processor (920) is further configured for selecting a set of timing information for monitoring said at least one downlink signal transmitted by said at least one other network node (120) operating in discontinuous transmission mode; and wherein the mobile station (130) further comprises:
a transmitter (930), configured for transmitting an indication of the selected set of timing information, to at least one first network node (110).

11. The mobile station (130) according to claim 10, wherein the processor (920) is further configured for selecting the set of timing information based on energy status of the mobile station (130).

12. The mobile station (130) according to any of claims 10-11, wherein the timing information concerns one or multiple component carriers.

13. A method (800) in a mobile station (130) for, based on timing information received from a first network node (110), periodically monitoring at least one downlink signal transmitted by at least one other network node (120) operating in discontinuous transmission mode, which method (800) comprises:
receiving (803) a signal from the first network node (110), comprising timing information for periodically monitoring at least one downlink signal transmitted by said at least one other network node (120) operating in discontinuous transmission mode, based on time-frequency characteristics of said at least one downlink signal transmitted by said at least one other network node (120) to be monitored; and
monitoring (804) said at least one downlink signal transmitted by said at least one other network node (120) operating in discontinuous transmission mode, periodically according to the received (803) signal;
wherein said timing information comprises at least one of: a starting time (to) of monitoring of said at least one downlink signal, a monitoring periodicity (T) of monitoring of said at least one downlink signal, a monitoring time window (W) of monitoring of said at least one downlink signal, and an ending time of monitoring of said at least one downlink signal;
wherein the method further comprises:
selecting a set of timing information for monitoring said at least one downlink signal transmitted by said at least one other network node (120) operating in discontinuous transmission mode; and transmitting an indication of the selected set of timing information, to at least one first network node (110).

14. The method (800) according to claim 13, wherein the set of timing information is selected based on energy status of the mobile station (130).

15. The method (800) according to any of claims 13-14, wherein the timing information concerns one or multiple component carriers.

## Patentansprüche

1. Erster Netzknoten (110) zum Liefern von Timinginformationen, die mindestens einen anderen Netzknoten (120) betreffen, an mindestens eine Mobilstation (130), wobei der erste Netzknoten (110) Folgendes umfasst:
einen Prozessor (720), ausgelegt zum Bestimmen von Timinginformationen zum periodischen Überwachen mindestens eines Downlink-Signals, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird; und einen Sender (730), ausgelegt zum Übertragen eines Signals, das die Timinginformationen umfasst, assoziiert mit einem periodischen Überwachen des mindestens einen Downlink-Signals, das durch den mindestens einen anderen Netzknoten (120), der im Diskontinuitätsübertragungsmodus arbeitet, übertragen wird, an die mindestens eine Mobilstation (130);
wobei die Timinginformationen mindestens eines der Folgenden umfassen: einen Startzeitpunkt (t₀) des Überwachens des mindestens einen Downlink-Signals, eine Überwachungsperiodizität (T) des Überwachens des mindestens einen Downlink-Signals, ein Überwachungszeitfenster (W) des Überwachens des mindestens einen Downlink-Signals und eine Beendigungszeit des Überwachens des mindestens einen Downlink-Signals;
einen Empfänger (710), ausgelegt zum Empfangen, von der mindestens einen Mobilstation (130), einer Angabe eines Satzes von Timinginformationen zum periodischen Überwachen des mindestens einen anderen Netzknotens (120), der im Diskontinuitätsübertragungsmodus arbeitet, wobei der Satz durch die Mobilstation (130) ausgewählt wurde; und wobei der Prozessor (720) ferner ausgelegt ist zum Bestimmen von Timinginformationen zum periodischen Überwachen des mindestens einen Downlink-Signals, das durch den mindestens einen anderen Netzknoten (120), der im Diskontinuitätsübertragungsmodus arbeitet, übertragen wird, basierend auf der empfangenen Angabe des Satzes von Timinginformationen.

2. Erster Netzknoten (110) nach Anspruch 1, wobei die Timinginformationen, die mit einem periodischen Überwachen des mindestens einen Downlink-Signals, das durch den mindestens einen anderen Netzknoten (120), der im Diskontinuitätsübertragungsmodus arbeitet, übertragen wird, assoziiert sind, einen oder mehrere Komponententräger betreffen.

3. Erster Netzknoten (110) nach einem der Ansprüche 1-2, wobei die Timinginformationen zum periodischen Überwachen des mindestens einen Downlink-Signals, das durch den mindestens einen anderen Netzknoten (120), der im Diskontinuitätsübertragungsmodus arbeitet, übertragen wird, für eine oder mehrere Überwachungsaktionen spezifisch sind, umfassend: Detektieren von Downlink-Entdeckungssignalen; periodisches Messen von Downlink-Entdeckungssignalen und Melden von Messungen von Downlink-Entdeckungssignalen von der Mobilstation (130) an mindestens einen Netzknoten (110, 120).

4. Erster Netzknoten (110) nach einem der Ansprüche 1-3, wobei die Timinginformationen, die mit einem periodischen Überwachen des mindestens einen Downlink-Signals, das durch den mindestens einen anderen Netzknoten (120), der im Diskontinuitätsübertragungsmodus arbeitet, übertragen wird, assoziiert sind und an die mindestens eine Mobilstation (130) übertragen werden, über Funkressourcensteuerungssignalisierung einer höheren Schicht und/oder über einen Bitübertragungsschicht-Downlink-Steuerkanal signalisiert werden.

5. Erster Netzknoten (110) nach einem der Ansprüche 1-4, wobei die Timinginformationen zum periodischen Überwachen des mindestens einen Downlink-Signals, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird, während eines Schlafzustands des mindestens einen anderen Netzknotens (120), der im Diskontinuitätsübertragungsmodus arbeitet, bestimmt werden.

6. Verfahren (600) in einem ersten Netzknoten (110) zum Liefern von Timinginformationen, die mindestens einen anderen Netzknoten (120) betreffen, an eine Mobilstation (130), wobei das Verfahren Folgendes umfasst:
Bestimmen (603) von Timinginformationen zum periodischen Überwachen mindestens eines Downlink-Signals, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird; und
Übertragen (604) eines Signals, das die Timinginformationen umfasst, assoziiert mit einem periodischen Überwachen des mindestens einen Downlink-Signals, das durch den mindestens einen anderen Netzknoten (120), der im Diskontinuitätsübertragungsmodus arbeitet, übertragen wird, an die mindestens eine Mobilstation (130);
wobei die Timinginformationen mindestens eines der Folgenden umfassen: einen Startzeitpunkt (to) des Überwachens des mindestens einen Downlink-Signals, eine Überwachungsperiodizität (T) des Überwachens des mindestens einen Downlink-Signals, ein Überwachungszeitfenster (W) des Überwachens des mindestens einen Downlink-Signals und einen Beendigungszeitpunkt des Überwachens des mindestens einen Downlink-Signals;
wobei das Verfahren ferner Folgendes umfasst:
Empfangen, von der mindestens einen Mobilstation (130), einer Angabe eines Satzes von Timinginformationen zum periodischen Überwachen des mindestens einen anderen Netzknotens (120), der im Diskontinuitätsübertragungsmodus arbeitet, wobei der Satz durch die Mobilstation (130) ausgewählt wurde; und
Bestimmen von Timinginformationen zum periodischen Überwachen des mindestens einen Downlink-Signals, das durch den mindestens einen anderen Netzknoten (120), der im Diskontinuitätsübertragungsmodus arbeitet, übertragen wird, basierend auf der empfangenen Angabe des Satzes von Timinginformationen.

7. Verfahren (600) nach Anspruch 6, wobei die Timinginformationen, die mit einem periodischen Überwachen des mindestens einen Downlink-Signals, das durch den mindestens einen anderen Netzknoten (120), der im Diskontinuitätsübertragungsmodus arbeitet, übertragen wird, assoziiert sind, einen oder mehrere Komponententräger betreffen.

8. Verfahren (600) nach einem der Ansprüche 6-7, wobei die Timinginformationen, die mit einem periodischen Überwachen des mindestens einen Downlink-Signals, das durch den mindestens einen anderen Netzknoten (120), der im Diskontinuitätsübertragungsmodus arbeitet, übertragen wird, assoziiert sind und an die mindestens eine Mobilstation (130) übertragen werden, über Funkressourcensteuerungssignalisierung einer höheren Schicht und/oder über einen Bitübertragungsschicht-Downlink-Steuerkanal signalisiert werden.

9. Verfahren (600) nach einem der Ansprüche 6-8, wobei die Timinginformationen zum periodischen Überwachen des mindestens einen Downlink-Signals, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird, während eines Schlafzustands des mindestens einen anderen Netzknotens (120), der im Diskontinuitätsübertragungsmodus arbeitet, bestimmt werden.

10. Mobilstation (130) zum periodischen Überwachen, basierend auf von einem ersten Netzknoten (110) empfangenen Timinginformationen, mindestens eines anderen Netzknotens (120), der im Diskontinuitätsübertragungsmodus arbeitet, wobei die Mobilstation (130) Folgendes umfasst:
einen Empfänger (910), ausgelegt zum Empfangen eines Signals von dem ersten Netzknoten (110), das Timinginformationen zum periodischen Überwachen mindestens eines Downlink-Signals umfasst, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird; und
einen Prozessor (920), ausgelegt zum periodischen Überwachen des mindestens einen Downlink-Signals, das durch den mindestens einen anderen Netzknoten (120), der im Diskontinuitätsübertragungsmodus arbeitet, übertragen wird, gemäß dem empfangenen Signal;
wobei die Timinginformationen mindestens eines der Folgenden umfassen: einen Startzeitpunkt (t₀) des Überwachens des mindestens einen Downlink-Signals, eine Überwachungsperiodizität (T) des Überwachens des mindestens einen Downlink-Signals, ein Überwachungszeitfenster (W) des Überwachens des mindestens einen Downlink-Signals und eine Beendigungszeit des Überwachens des mindestens einen Downlink-Signals;
wobei der Prozessor (920) ferner ausgelegt ist zum Auswählen eines Satzes von Timinginformationen zum Überwachen des mindestens einen Downlink-Signals, das durch den mindestens einen anderen Netzknoten (120), der im Diskontinuitätsübertragungsmodus arbeitet, übertragen wird; und wobei die Mobilstation (130) ferner Folgendes umfasst:
einen Sender (930), ausgelegt zum Übertragen einer Angabe des ausgewählten Satzes von Timinginformationen an mindestens einen ersten Netzknoten (110).

11. Mobilstation (130) nach Anspruch 10, wobei der Prozessor (920) ferner ausgelegt ist zum Auswählen des Satzes von Timinginformationen basierend auf einem Energiestatus der Mobilstation (130).

12. Mobilstation (130) nach einem der Ansprüche 10-11, wobei die Timinginformationen einen oder mehrere Komponententräger betreffen.

13. Verfahren (800) in einer Mobilstation (130) zum periodischen Überwachen, basierend auf von einem ersten Netzknoten (110) empfangenen Timinginformationen, mindestens eines Downlink-Signals, das durch mindestens einen anderen Netzknoten (120), der im Diskontinuitätsübertragungsmodus arbeitet, übertragen wird, wobei das Verfahren (800) Folgendes umfasst:
Empfangen (803) eines Signals von dem ersten Netzknoten (110), das Timinginformationen zum periodischen Überwachen mindestens eines Downlink-Signals umfasst, das durch den mindestens einen anderen Netzknoten (120), der im Diskontinuitätsübertragungsmodus arbeitet, übertragen wird, basierend auf Zeit-Frequenz-Charakteristiken des mindestens einen Downlink-Signals, das durch den mindestens einen zu überwachenden anderen Netzknoten (120) übertragen wird; und periodisches Überwachen (804) des mindestens einen Downlink-Signals, das durch den mindestens einen anderen Netzknoten (120), der im Diskontinuitätsübertragungsmodus arbeitet, übertragen wird, gemäß dem empfangenen (803) Signal;
wobei die Timinginformationen mindestens eines der Folgenden umfassen: einen Startzeitpunkt (to) des Überwachens des mindestens einen Downlink-Signals, eine Überwachungsperiodizität (T) des Überwachens des mindestens einen Downlink-Signals, ein Überwachungszeitfenster (W) des Überwachens des mindestens einen Downlink-Signals und eine Beendigungszeit des Überwachens des mindestens einen Downlink-Signals;
wobei das Verfahren ferner Folgendes umfasst:
Auswählen eines Satzes von Timinginformationen zum Überwachen des mindestens einen Downlink-Signals, das durch den mindestens einen anderen Netzknoten (120), der im Diskontinuitätsübertragungsmodus arbeitet, übertragen wird; und Übertragen einer Angabe des ausgewählten Satzes von Timinginformationen an mindestens einen ersten Netzknoten (110).

14. Verfahren (800) nach Anspruch 13, wobei der Satz von Timinginformationen basierend auf einem Energiestatus der Mobilstation (130) ausgewählt wird.

15. Verfahren (800) nach einem der Ansprüche 13-14, wobei die Timinginformationen einen oder mehrere Komponententräger betreffen.

## Revendications

1. Premier nœud de réseau (110) pour fournir des informations de temporisation concernant au moins un autre nœud de réseau (120) à au moins une station mobile (130), lequel premier nœud de réseau (110) comprenant :
un processeur (720), configuré pour déterminer des informations de temporisation pour la surveillance périodique d'au moins un signal de liaison descendante transmis par ledit au moins un autre nœud de réseau (120) fonctionnant en mode de transmission discontinue, sur la base de caractéristiques temps-fréquence dudit au moins un signal de liaison descendante transmis par ledit au moins un autre nœud de réseau (120) à surveiller ; et
un transmetteur (730), configuré pour transmettre un signal comprenant lesdites informations de temporisation, associées à une surveillance périodique dudit au moins un signal de liaison descendante transmis par ledit au moins un autre nœud de réseau (120) fonctionnant en mode de transmission discontinue, à l'au moins une station mobile (130) ;
lesdites informations de temporisation comprenant au moins un élément parmi : un temps de début (to) de surveillance dudit au moins un signal de liaison descendante, une périodicité de surveillance (T) de surveillance dudit au moins un signal de liaison descendante, une fenêtre temporelle de surveillance (W) de surveillance dudit au moins un signal de liaison descendante, et un temps de fin de surveillance dudit au moins un signal de liaison descendante ;
un récepteur (710), configuré pour recevoir, en provenance de l'au moins une station mobile (130), une indication d'un ensemble d'informations de temporisation pour surveiller périodiquement l'au moins un autre nœud de réseau (120) fonctionnant en mode de transmission discontinue, lequel ensemble ayant été sélectionné par la station mobile (130) ; et le processeur (720) étant en outre configuré pour déterminer des informations de temporisation pour la surveillance périodique dudit au moins un signal de liaison descendante transmis par ledit au moins un autre nœud de réseau (120) fonctionnant en mode de transmission discontinue, sur la base de l'indication reçue dudit ensemble d'informations de temporisation.

2. Premier nœud de réseau (110) selon la revendication 1, les informations de temporisation associées à une surveillance périodique dudit au moins un signal de liaison descendante transmis par ledit au moins un autre nœud de réseau (120) fonctionnant en mode de transmission discontinue concernant une ou plusieurs porteuses composantes.

3. Premier nœud de réseau (110) selon l'une quelconque des revendications 1 et 2, les informations de temporisation pour une surveillance périodique dudit au moins un signal de liaison descendante transmis par ledit au moins un autre nœud de réseau (120) fonctionnant en mode de transmission discontinue étant spécifiques à une ou plusieurs actions de surveillance comprenant : la détection de signaux de découverte de liaison descendante ;
la mesure périodique des signaux de découverte de liaison descendante ; et le rapport de mesures de signaux de découverte de liaison descendante de la station mobile (130) à au moins un nœud de réseau (110, 120).

4. Premier nœud de réseau (110) selon l'une quelconque des revendications 1 à 3, les informations de temporisation associées à une surveillance périodique dudit au moins un signal de liaison descendante transmis par ledit au moins un autre nœud de réseau (120) fonctionnant en mode de transmission discontinue, transmis à l'au moins une station mobile (130), étant signalées par l'intermédiaire d'une signalisation de commande de ressource radio de couche supérieure et/ou par l'intermédiaire d'un canal de commande de liaison descendante de couche physique.

5. Premier nœud de réseau (110) selon l'une quelconque des revendications 1 à 4, les informations de temporisation pour la surveillance périodique dudit au moins un signal de liaison descendante transmis par ledit au moins un autre nœud de réseau (120) fonctionnant en mode de transmission discontinue étant déterminées sur la base de caractéristiques temps-fréquence d'au moins un signal de liaison descendante transmis par ledit au moins un autre nœud de réseau (120) à surveiller, pendant un état dormant de l'au moins un autre nœud de réseau (120) fonctionnant en mode de transmission discontinue.

6. Procédé (600) dans un premier nœud de réseau (110) pour fournir des informations de temporisation concernant au moins un autre nœud de réseau (120) à une station mobile (130), le procédé comprenant :
la détermination (603) d'informations de temporisation pour la surveillance périodique d'au moins un signal de liaison descendante transmis par ledit au moins un autre nœud de réseau (120) fonctionnant en mode de transmission discontinue, sur la base de caractéristiques temps-fréquence dudit au moins un signal de liaison descendante transmis par ledit au moins un autre nœud de réseau (120) à surveiller ;
et
la transmission (604) d'un signal comprenant lesdites informations de temporisation, associées à une surveillance périodique dudit au moins un signal de liaison descendante transmis par ledit au moins un autre nœud de réseau (120) fonctionnant en mode de transmission discontinue, à l'au moins une station mobile (130) ;
lesdites informations de temporisation comprenant au moins l'un des éléments suivants : un temps de début (to) de surveillance dudit au moins un signal de liaison descendante, une périodicité de surveillance (T) de surveillance dudit au moins un signal de liaison descendante, une fenêtre temporelle de surveillance (W) de surveillance dudit au moins un signal de liaison descendante, et un temps de fin de surveillance dudit au moins un signal de liaison descendante ;
le procédé comprenant en outre :
la réception, en provenance de l'au moins une station mobile (130), d'une indication d'un ensemble d'informations de temporisation pour surveiller périodiquement l'au moins un autre nœud de réseau (120) fonctionnant en mode de transmission discontinue, lequel ensemble ayant été sélectionné par la station mobile (130) ; et
la détermination d'informations de temporisation pour la surveillance périodique dudit au moins un signal de liaison descendante transmis par ledit au moins un autre nœud de réseau (120) fonctionnant en mode de transmission discontinue, sur la base de l'indication reçue dudit ensemble d'informations de temporisation.

7. Procédé (600) selon la revendication 6, les informations de temporisation associées à la surveillance périodique dudit au moins un signal de liaison descendante transmis par ledit au moins un autre nœud de réseau (120) fonctionnant en mode de transmission discontinue concernant une ou plusieurs porteuses composantes.

8. Procédé (600) selon l'une quelconque des revendications 6 et 7, les informations de temporisation associées à la surveillance périodique dudit au moins un signal de liaison descendante transmis par ledit au moins un autre nœud de réseau (120) fonctionnant en mode de transmission discontinue, transmis à l'au moins une station mobile (130), étant signalées par l'intermédiaire d'une signalisation de commande de ressource radio de couche supérieure et/ou par l'intermédiaire d'un canal de commande de liaison descendante de couche physique.

9. Procédé (600) selon l'une quelconque des revendications 6 à 8, les informations de temporisation pour la surveillance périodique dudit au moins un signal de liaison descendante transmis par ledit au moins un autre nœud de réseau (120) fonctionnant en mode de transmission discontinue étant déterminées sur la base de caractéristiques temps-fréquence d'au moins un signal de liaison descendante transmis par ledit au moins un autre nœud de réseau (120) à surveiller, pendant un état dormant de l'au moins un autre nœud de réseau (120) fonctionnant en mode de transmission discontinue.

10. Station mobile (130) pour, sur la base d'informations de temporisation reçues en provenance d'un premier nœud de réseau (110), une surveillance périodique d'au moins un autre nœud de réseau (120) fonctionnant en mode de transmission discontinue, laquelle station mobile (130) comprenant :
un récepteur (910), configuré pour recevoir un signal en provenance du premier nœud de réseau (110), comprenant des informations de temporisation pour la surveillance périodique d'au moins un signal de liaison descendante transmis par ledit au moins un autre nœud de réseau (120) fonctionnant en mode de transmission discontinue, sur la base de caractéristiques temps-fréquence dudit au moins un signal de liaison descendante transmis par ledit au moins un autre nœud de réseau (120) à surveiller ; et
un processeur (920), configuré pour surveiller périodiquement ledit au moins un signal de liaison descendante transmis par ledit au moins un autre nœud de réseau (120) fonctionnant en mode de transmission discontinue, en fonction du signal reçu ;
lesdites informations de temporisation comprenant au moins un élément parmi : un temps de début (to) de surveillance dudit au moins un signal de liaison descendante, une périodicité de surveillance (T) de surveillance dudit au moins un signal de liaison descendante, une fenêtre temporelle de surveillance (W) de surveillance dudit au moins un signal de liaison descendante, et un temps de fin de surveillance dudit au moins un signal de liaison descendante ;
le processeur (920) étant en outre configuré pour sélectionner un ensemble d'informations de temporisation pour surveiller ledit au moins un signal de liaison descendante transmis par ledit au moins un autre nœud de réseau (120) fonctionnant en mode de transmission discontinue; et la station mobile (130) comprenant en outre :
un transmetteur (930), configuré pour transmettre une indication de l'ensemble sélectionné d'informations de temporisation, à au moins un premier nœud de réseau (110).

11. Station mobile (130) selon la revendication 10, le processeur (920) étant en outre configuré pour sélectionner l'ensemble d'informations de temporisation sur la base d'un état énergétique de la station mobile (130).

12. Station mobile (130) selon l'une quelconque des revendications 10 et 11, les informations de temporisation concernant une ou plusieurs porteuses composantes.

13. Procédé (800) dans une station mobile (130) pour, sur la base d'informations de temporisation reçues en provenance d'un premier nœud de réseau (110), une surveillance périodique d'au moins un signal de liaison descendante transmis par au moins un autre nœud de réseau (120) fonctionnant en mode de transmission discontinue, lequel procédé (800) comprenant :
la réception (803) d'un signal en provenance du premier nœud de réseau (110), comprenant des informations de temporisation pour la surveillance périodique d'au moins un signal de liaison descendante transmis par ledit au moins un autre nœud de réseau (120) fonctionnant en mode de transmission discontinue, sur la base de caractéristiques temps-fréquence dudit au moins un signal de liaison descendante transmis par ledit au moins un autre nœud de réseau (120) à surveiller ; et
la surveillance (804) dudit au moins un signal de liaison descendante transmis par ledit au moins un autre nœud de réseau (120) fonctionnant en mode de transmission discontinue, périodique en fonction du signal reçu (803) ;
lesdites informations de temporisation comprenant au moins un élément parmi : un temps de début (to) de surveillance dudit au moins un signal de liaison descendante, une périodicité de surveillance (T) de surveillance dudit au moins un signal de liaison descendante, une fenêtre temporelle de surveillance (W) de surveillance dudit au moins un signal de liaison descendante, et un temps de fin de surveillance dudit au moins un signal de liaison descendante ;
le procédé comprenant en outre :
la sélection d'un ensemble d'informations de temporisation pour surveiller ledit au moins un signal de liaison descendante transmis par ledit au moins un autre nœud de réseau (120) fonctionnant en mode de transmission discontinue ; et la transmission d'une indication de l'ensemble sélectionné d'informations de temporisation, à au moins un premier nœud de réseau (110).

14. Procédé (800) selon la revendication 13, l'ensemble d'informations de temporisation étant sélectionné sur la base d'un état énergétique de la station mobile (130).

15. Procédé (800) selon l'une quelconque des revendications 13 et 14, les informations de temporisation concernant une ou plusieurs porteuses composantes.
